# EUROPEAN PATENT APPLICATION

(11) **EP 4 842 066 A1**
(43) Date of publication of application: **18.11.2026**
(21) Application number: 25738315.8
(22) Date of filing: 03.01.2025
(51) Int. Cl.: H04W 40/12

(54) **COMMUNICATION METHOD AND APPARATUS, AND COMMUNICATION DEVICE**

(30) Priority: 10.01.2024 CN 202410042725
(71) Applicant: Vivo Mobile Communication Co., Ltd., Dongguan, Guangdong 523863 (CN)
(72) Inventor: JIN, Hui, Dongguan, Guangdong 523863 (CN); XIE, Zhenhua, Dongguan, Guangdong 523863 (CN)
(74) Representative: Studio Torta S.p.A.
(86) International application number: PCT/CN2025/070303
(87) International publication number: WO 2025/148784

(57) **Abstract**

The present disclosure provides a communication method and apparatus, and a communication device, pertaining to the field of communication technologies. The communication method in embodiments of the present application includes: receiving, by a first core network function, a first message from a second core network function, where the first message is used for establishing a voice bearer for a first terminal, and the first message includes information related to the first terminal and information related to a second terminal; and performing, by the first core network function, a first operation or a second operation based on the first message; where the first operation includes: determining that the first terminal and the second terminal access a network through a same satellite or different satellites; and the second operation includes: sending a second message to a third core network function, where the second message is used to add a fourth core network function to a communication path, and the fourth core network function is a core network function configured to control a user plane function UPF included in a satellite.

## Description

### CROSS-REFERENCE TO RELATED APPLICATIONS

The present application claims priority to Chinese Patent Application No. 202410042725.0, filed in China on January 10, 2024, which is incorporated herein by reference in its entirety.

### TECHNICAL FIELD

The present application pertains to the field of communications technologies, and specifically, relates to a communication method and apparatus, and a communication device.

### BACKGROUND

Related technologies propose a non-terrestrial network (Non-Terrestrial Network, NTN) scenario. In this scenario, a communication path for an Internet Protocol (Internet Protocol, IP) multimedia subsystem (IP Multimedia Subsystem, IMS) call between two user equipments (User Equipment, UE, also referred to as "terminals") is UE1-satellite (satellite)-ground station-terrestrial network-ground station-satellite-UE2. Since the satellite is far from the ground, this communication path is relatively long, leading to a relatively large call latency.

### SUMMARY

Embodiments of the present application provide a communication method and apparatus, and a communication device, which can resolve the problem of a relatively large call latency caused by a relatively long communication path in the NTN scenario of related technologies.

According to a first aspect, a communication method is provided, where the method is executed by a first core network function, and the method includes:
receiving, by a first core network function, a first message from a second core network function, where the first message is used for establishing a voice bearer for a first terminal, and the first message includes information related to the first terminal and information related to a second terminal; and
performing, by the first core network function, a first operation or a second operation based on the first message.

The first operation includes: determining that the first terminal and the second terminal access a network through a same satellite or different satellites; and
the second operation includes: sending a second message to a third core network function, where the second message is used to add a fourth core network function to a communication path, and the fourth core network function is a core network function configured to control a user plane function UPF included in a satellite.

According to a second aspect, a communication method is provided, where the method is executed by a second core network function, and the method includes:
receiving, by a second core network function, a sixth message from a fifth core network function, where the sixth message includes information related to a first terminal and information related to a second terminal; and
determining, by the second core network function, that the first terminal and the second terminal access a network through a same satellite or different satellites.

According to a third aspect, a communication method is provided, where the method is executed by a fourth core network function, and the method includes:
receiving, by a fourth core network function, a sixth message from a third core network function, where the sixth message includes first information, and the first information includes information for indicating a terminal-satellite-terminal USU service; and
performing, by the fourth core network function, a third operation based on the first information.

The third operation includes at least one of the following:
adding a UPF of a target satellite as a protocol data unit session anchor PSA to a protocol data unit PDU session;
adding the UPF of the target satellite as an uplink classifier UL CL to a PDU session;
sending a seventh message to the UPF of the target satellite, where the seventh message is used to indicate establishing a voice bearer for a first terminal; and
sending third information to the UPF of the target satellite, where the third information includes a local forwarding rule.

The target satellite is a satellite where the first terminal and a second terminal are located.

According to a fourth aspect, a communication apparatus is provided, applied to a first core network function, and the apparatus includes:
a receiving unit, configured to receive a first message from a second core network function, where the first message is used for establishing a voice bearer for a first terminal, and the first message includes information related to the first terminal and information related to a second terminal; and
the apparatus further includes at least one of the following:
   a first processing unit, configured to determine that the first terminal and the second terminal access a network through a same satellite or different satellites;
   a first sending unit, configured to send a second message to a third core network function, where the second message is used to add a fourth core network function to a communication path, and the fourth core network function is a core network function configured to control a user plane function UPF included in a satellite.

According to a fifth aspect, a communication apparatus is provided, applied to a second core network function, and the apparatus includes:
a first receiving unit, configured to receive a sixth message from a fifth core network function, where the sixth message includes information related to a first terminal and information related to a second terminal; and
a processing unit, configured to determine that the first terminal and the second terminal access a network through a same satellite or different satellites.

According to a sixth aspect, a communication apparatus is provided, applied to a fourth core network function, and the apparatus includes:
a receiving unit, configured to receive a sixth message from a third core network function, where the sixth message includes first information, and the first information includes information for indicating a terminal-satellite-terminal USU service; and
an execution unit, configured to perform a third operation based on the first information.

The third operation includes at least one of the following:
adding a UPF of a target satellite as a protocol data unit session anchor PSA to a protocol data unit PDU session;
adding the UPF of the target satellite as an uplink classifier UL CL to a PDU session;
sending a seventh message to the UPF of the target satellite, where the seventh message is used to indicate establishing a voice bearer for a first terminal; and
sending third information to the UPF of the target satellite, where the third information includes a local forwarding rule.

The target satellite is a satellite where the first terminal and a second terminal are located.

According to a seventh aspect, a communication device is provided, where the communication device includes a processor and a memory, and a program or instructions capable of running on the processor are stored in the memory. When the program or the instructions are executed by the processor, the steps of the method according to the first aspect, or the steps of the method according to the second aspect are implemented, or the steps of the method according to the third aspect are implemented.

According to an eighth aspect, a network-side device is provided, where the network-side device includes a processor and a communication interface, where the communication interface is configured to receive a first message from a second core network function, where the first message is used for establishing a voice bearer for a first terminal, and the first message includes information related to the first terminal and information related to a second terminal; and send a second message to a third core network function, where the second message is used to add a fourth core network function to a communication path, and the fourth core network function is a core network function configured to control a user plane function UPF included in a satellite;
or,
the communication interface is configured to receive a first message from a second core network function, where the first message is used for establishing a voice bearer for a first terminal, and the first message includes information related to the first terminal and information related to a second terminal; and the processor is configured to determine that the first terminal and the second terminal access a network through a same satellite or different satellites.

According to a ninth aspect, a network-side device is provided, where the network-side device includes a processor and a communication interface, where the communication interface is configured to receive a sixth message from a fifth core network function, where the sixth message includes information related to a first terminal and information related to a second terminal; and the processor is configured to determine that the first terminal and the second terminal access a network through a same satellite or different satellites.

According to a tenth aspect, a network-side device is provided, including a processor and a communication interface, where the communication interface is configured to: receive a sixth message from a third core network function, where the sixth message includes first information, and the first information includes information for indicating a terminal-satellite-terminal USU service; and the communication interface or the processor is configured to perform at least one of the following: adding a UPF of a target satellite as a protocol data unit session anchor PSA to a protocol data unit PDU session; adding the UPF of the target satellite as an uplink classifier UL CL to a PDU session; sending a seventh message to the UPF of the target satellite, where the seventh message is used to indicate establishing a voice bearer for a first terminal; and sending third information to the UPF of the target satellite, where the third information includes a local forwarding rule; where the target satellite is a satellite where the first terminal and a second terminal are located.

According to an eleventh aspect, a readable storage medium is provided, where the readable storage medium stores a program or instructions, and when the program or instructions are executed by the processor, the steps of the method according to the first aspect are implemented, or the steps of the method according to the second aspect are implemented, or the steps of the method according to the third aspect are implemented.

According to a twelfth aspect, a wireless communication system is provided, including a first core network function and a second core network function, where the first core network function can be configured to execute the steps of the method according to the first aspect, and the second core network function can be configured to execute the steps of the method according to the second aspect.

According to a thirteenth aspect, a chip is provided, where the chip includes a processor and a communication interface, the communication interface is coupled to the processor, and the processor is configured to run a program or instructions to implement the method according to the first aspect, or the method according to the second aspect, or the method according to the third aspect.

According to a fourteenth aspect, a computer program/program product is provided, where the computer program/program product is stored in a storage medium, and the program/program product is executed by at least one processor to implement the steps of the method according to the first aspect, or the steps of the method according to the second aspect, or the steps of the method according to the third aspect.

In embodiments of the present application, the first core network function receives the first message from the second core network function, where the first message is used for establishing a voice bearer for the first terminal, and the first message includes information related to the first terminal and information related to the second terminal. The first core network function performs the first operation or the second operation based on the first message; where the first operation includes: determining that the first terminal and the second terminal access the network through a same satellite or different satellites; and the second operation includes: sending the second message to the third core network function, where the second message is used to add the fourth core network function to a communication path, and the fourth core network function is a core network function configured to control a user plane function UPF included in a satellite. In this way, performing the first operation or the second operation facilitates enabling two UEs to perform UE-satellite-UE (UE-satellite-UE, USU) calls, which helps shorten a communication path of the call and reduce the call latency.

### BRIEF DESCRIPTION OF DRAWINGS

FIG. 1 is a block diagram of a wireless communication system according to an embodiment of the present application;
FIG. 2 is a flowchart of an IMS call process in related technologies;
FIG. 3 is a flowchart of a communication method according to an embodiment of the present application;
FIG. 4 is a flowchart of another communication method according to an embodiment of the present application;
FIG. 5 is a flowchart of another communication method according to an embodiment of the present application;
FIG. 6 is a flowchart of Embodiment 1 according to an embodiment of the present application;
FIG. 7 is a flowchart of Embodiment 2 according to an embodiment of the present application;
FIG. 8 is a flowchart of Embodiment 3 according to an embodiment of the present application;
FIG. 9 is a flowchart of Embodiment 4 according to an embodiment of the present application;
FIG. 10a is a first structural diagram of a communication apparatus according to an embodiment of the present application;
FIG. 10b is a second structural diagram of a communication apparatus according to an embodiment of the present application;
FIG. 11 is a structural diagram of another communication apparatus according to an embodiment of the present application;
FIG. 12 is a structural diagram of another communication apparatus according to an embodiment of the present application;
FIG. 13 is a structural diagram of a communication device according to an embodiment of the present application; and
FIG. 14 is a schematic structural diagram of a network-side device according to an embodiment of the present application.

### DETAILED DESCRIPTION OF EMBODIMENTS

The following clearly describes the technical solutions in the embodiments of the present application with reference to the accompanying drawings in the embodiments of the present application. Apparently, the described embodiments are only some rather than all of the embodiments of the present application. All other embodiments obtained by persons of ordinary skill in the art based on the embodiments of the present application fall within the protection scope of the present application.

The terms "first", ''second'', and the like in the present application are used to distinguish between similar objects instead of describing a specific order or sequence. It should be understood that terms used in this way are interchangeable in appropriate circumstances so that the embodiments of the present application can be implemented in other orders than the order illustrated or described herein. In addition, "first" and "second" are usually used to distinguish objects of a same type, and do not restrict a quantity of objects. For example, there may be one or a plurality of first objects. In addition, the "or" in the present application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in the present application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining based on the indication sent by the sender, and determines, based on a determining result, an operation that needs to be performed or a request result.

It should be noted that technologies described in the embodiments of the present application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of the present application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6 ^{th} generation (6^{th} Generation, 6G) communication system.

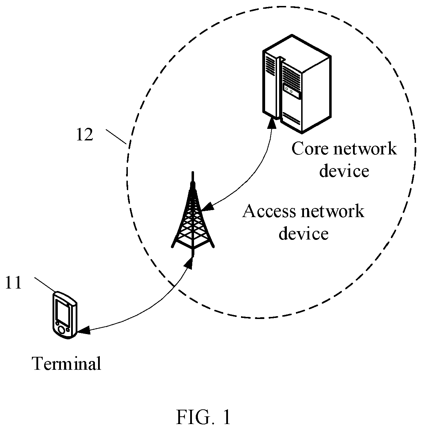

FIG. 1 is a block diagram of a wireless communication system to which the embodiments of the present application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a smart wrist band, smart earphones, smart glasses, smart jewelry (smart bracelet, smart wristband, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. In addition to the foregoing terminal device, it may alternatively be a chip in a terminal, such as a modem (Modem) chip or a system on chip (System on Chip, SoC). It should be noted that a specific type of the terminal 11 is not limited in the embodiments of the present application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a Node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of the present application, the base station in the NR system is merely used as an example, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of the present application, only the core network device in the NR system is introduced as an example, and the specific type of the core network device is not limited.

The IMS call procedure in related technologies is briefly introduced below.

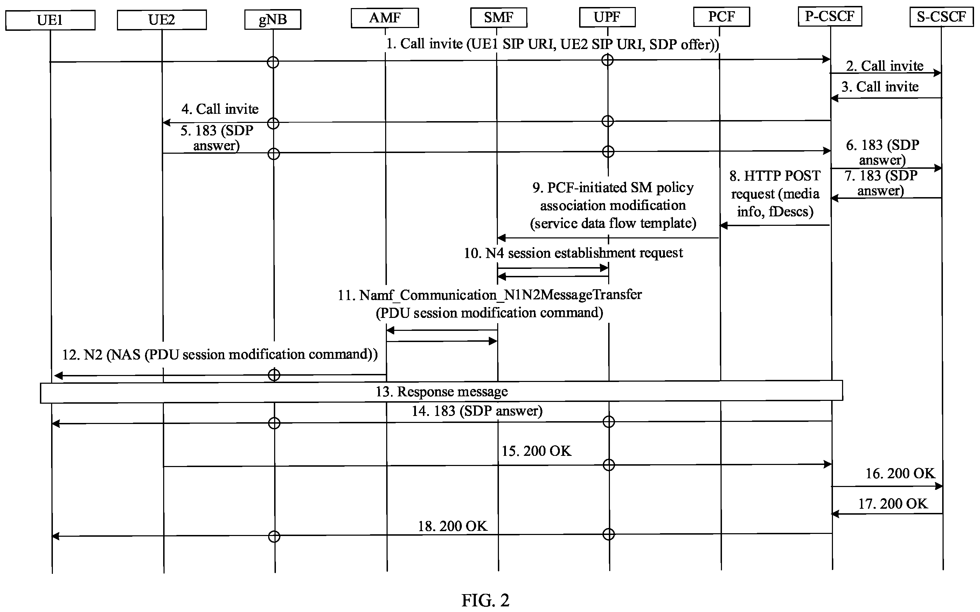

As shown in FIG. 2, the IMS call procedure includes the following steps:
1. UE1 sends a call invite (invite) message to UE2, the request including the following content:
   a session initiation protocol (Session Initiation Protocol, SIP) uniform resource identifier (Uniform Resource Identifier, URI) of UE2;
   a SIP URI of UE1;
   access network information (P-Access-Network-Info), including a cell global identity (Cell Global Identity, CGI); and
   a session description protocol (Session Description Protocol, SDP) offer (offer).

The CGI is a globally unique identifier of a cell where the UE camps. When the cell is a fifth generation telecommunication network (Fifth Generation Telecommunications Network, 5G) cell, it is an NR cell global identifier (NR Cell Global Identifier, NCGI); when the cell is a fourth generation of mobile telecommunications network (Fourth Generation of Mobile Telecommunications Network, 4G) cell, it is an E-UTRAN cell global identifier (E-Utran Cell Global Identifier, ECGI).

2. A proxy-call session control function (Proxy-Call Session Control Function, P-CSCF) sends an invite message to a serving-call session control function (Serving-Call Session Control Function, S-CSCF).

If IP1 is a private network IP, the P-CSCF instructs an access gateway (Access Gateway, AGW) to allocate a corresponding public network IP for the private network IP.

3-4. The invite message is routed to UE2.

5. UE2 replies with a 183 response message, where the message carries an SDP answer (answer).

6-7. The 183 message is sent to the P-CSCF.

8. The P-CSCF generates, based on the SDP offer and the SDP answer, media information (media info) corresponding to the voice media, and flow description (Flow Description, fDescs) information. The fDescs include calling and called IP address and port number information corresponding to the voice media.

If both UE1 and UE2 have public network IPs, the fDescs include the public network IPs of the calling and called UEs.

If UE1 has a private network IP, the fDescs include the private network IP address and port number of UE1, and the public network IP and port number of the AGW.

9. A PCF sends a message to an SMF, where the message is used to instruct the SMF to establish a voice quality of service (Quality of Service, QoS) flow (flow). Here, establishing the voice QoS flow may be understood as establishing a voice bearer. The message carries a service data flow template (service data flow template), where the service data flow template is generated by the PCF based on the fDescs.

10. The SMF sends an N4 session establishment request (N4 session establishment Request) message to the UPF.

11. The SMF sends a protocol data unit (Protocol Data Unit, PDU) session modification command (PDU Session Modification command) to an AMF to establish a voice QoS flow.

12. The AMF sends a PDU session modification command to UE1 to establish a voice QoS flow.

It should be noted that the voice QoS flow may be understood as a QoS flow used for transmitting voice media. The QoS level corresponding to this QoS flow is 1.

13. UE1 replies with a response message, completing establishment of the voice QoS flow.

14. After determining that the voice QoS flow of UE1 is successfully established, the P-CSCF sends a 183 response message to UE1.

15-18. The user of UE2 answers an incoming call, and UE2 replies with a 200 OK message, where the 200 OK message is routed to UE1.

In the related art, in an NTN scenario, a communication path for an IMS call between two UEs is UE1 - satellite - ground station - terrestrial network (for example, 5G UPF) - ground station - satellite - UE2. Since the satellite is far from the ground, this communication path is relatively long, leading to a relatively large call latency, affecting user experience. One solution is to place the UPF on the satellite. In this way, when two UEs access the network through the same satellite, the two UEs can perform a UE-satellite-UE (UE-satellite-UE, USU) call. A USU call can shorten the communication path between the two UEs, thereby reducing call latency and improving user experience.

It should be noted that in the present application, the USU call may also be understood or replaced as USU communication (communicate). The same applies below and will not be reiterated.

However, in the above voice bearer establishment procedure, the SMF cannot perceive whether the two UEs access the network through a same satellite, and thus cannot implement USU calls, and cannot solve the problem of a relatively large call latency caused by a relatively long communication path in the NTN scenario of related technologies.

In view of this, embodiments of the present application provide a communication method and apparatus, and a related device, which can resolve the problem of a relatively large call latency caused by a relatively long communication path in the NTN scenario of related technologies.

The following specifically describes the communication method provided in the embodiments of the present application with reference to the accompanying drawings.

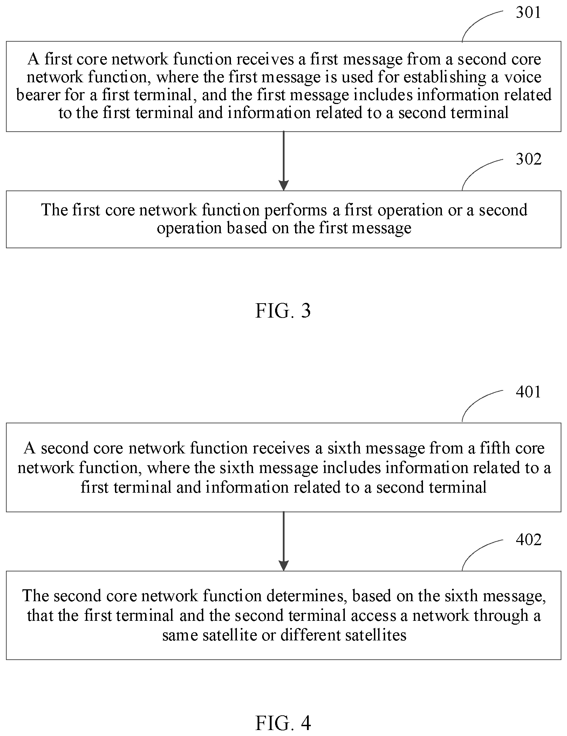

FIG. 3 is a flowchart of a communication method according to an embodiment of the present application. As shown in FIG. 3, the communication method includes the following steps.

Step 301: A first core network function receives a first message from a second core network function, where the first message is used for establishing a voice bearer for a first terminal, and the first message includes information related to the first terminal and information related to a second terminal.

It should be noted that the voice bearer is a bearer or data channel for transmitting voice services. Its corresponding concept in a 5G communication system is a QoS flow, and its corresponding concept in a 4G communication system is an EPS bearer. A QoS level corresponding to the voice bearer is 1. The same applies below and will not be reiterated.

Step 302: The first core network function performs a first operation or a second operation based on the first message.

The first operation includes: determining that the first terminal and the second terminal access a network through a same satellite or different satellites. The second operation includes: sending a second message to a third core network function, where the second message is used to add a fourth core network function to a communication path, and the fourth core network function is a core network function configured to control a UPF included in a satellite.

In this embodiment of the present application, the first terminal is a calling terminal, and the second terminal is a called terminal. For ease of description, the first terminal may be represented as UE1, and the second terminal may be represented as UE2.

The first core network function may be, for example, an SMF, the second core network function may be, for example, a PCF, the third core network function may be, for example, an AMF, and the fourth core network function may be, for example, an Intermediate SMF (Intermediate SMF, I-SMF).

Related steps involved in this embodiment of the present application may be understood as part of establishing a voice bearer in the entire IMS call procedure, namely step 8 and subsequent steps of FIG. 2.

The first message is configured to request or indicate the first core network function to establish a voice bearer (for example, a QoS flow), and the first message may carry a service data flow template (service data flow template). The first message may be, for example, a PCF initiated session management (Session Management, SM) policy association modification (PCF initiated SM policy association modification) message.

Optionally, the first message also carries indication information (indication), where the indication information is used to indicate a USU service. For ease of description, the indication information is referred to as first information in the embodiments of the present application.

For example, before step 301, when the P-CSCF sends media information corresponding to voice to the PCF, indication information for indicating that UE1 and UE2 access the network through a same satellite may be carried. That is, the P-CSCF has already pre-determined, in the previous IMS call establishment procedure, that UE1 and UE2 access the network through the same satellite, and sends corresponding indication information to the PCF. When the PCF sends the first message to the first core network function, indication information (that is, the first information) may be carried in the first message. It should be noted that the indication information sent by the P-CSCF to the PCF may be the same as or different from the indication information carried in the first message.

Since the first message may carry the first information or may not carry the first information, the first core network function can perform the first operation or the second operation based on the first message.

For example, if the first message does not carry the first information, the first core network function at that time does not know whether UE1 and UE2 access the network through the same satellite, so the first core network function may choose to perform the first operation. If the first message carries the first information, the first core network function may choose to perform the second operation. Certainly, even if the first message carries the first information, the first core network function may also choose to perform the first operation, which is not limited in the embodiments of the present application.

If the first core network function chooses to perform the first operation, the first core network function may determine, based on a determining result, what operation to perform subsequently. For example, if the first core network function determines that UE1 and UE2 access the network through a same satellite, then the first core network function may perform a subsequent operation required for the USU call. Therefore, the first core network function determining that UE1 and UE2 access the network through the same satellite or different satellites facilitates implementing USU calls between two UEs, which helps shorten a communication path of the call and reduce the call latency.

It should be noted that the first core network function determining that the first terminal and the second terminal access the network through a same satellite or different satellites may be replaced by the first core network function determining whether the first terminal and the second terminal access the network through a same satellite. The word "determine" may be replaced by similar words such as judge, decide, make a decision, or verify.

It should be noted that the first terminal and the second terminal accessing the network through the same satellite may be understood as: the satellite includes a base station function, the first terminal and the second terminal are connected to the base station in the same satellite, and are connected to a 5G core network, a 4G core network, or an IMS network through the base station; or, the first terminal and the second terminal are under the same satellite (under the same satellite), and both are connected to a 5G core network, a 4G core network, or an IMS network through the base station included in the satellite.

It should be noted that accessing the network through different satellites may be replaced by not accessing the network through a same satellite. The first terminal and the second terminal accessing the network through different satellites may be understood as: both the first terminal and the second terminal access the network through satellites, but the satellites to which the first terminal and the second terminal are connected are different; or, only one of the first terminal and the second terminal accesses the network through a satellite, and the other accesses the network through a terrestrial base station.

If the first core network function chooses to perform the second operation, it indicates that UE1 and UE2 access the network through the same satellite. In this way, the third core network function may add the fourth core network function, which is configured to control the UPF included in the satellite, to the communication path based on the second message. Thus, the fourth core network function may control the UPF included in the satellite, which is also beneficial for implementing USU calls between the two UEs, which helps shorten a communication path of the call and reduce the call latency.

Therefore, regardless of whether the first core network function performs the first operation or the second operation, it is conducive to enabling two UEs to perform USU calls, which helps shorten a communication path of the call and reduce the call latency.

In this embodiment of the present application, the first core network function receives the first message from the second core network function, where the first message is used for establishing a voice bearer for the first terminal, and the first message includes information related to the first terminal and information related to the second terminal. The first core network function performs the first operation or the second operation based on the first message; where the first operation includes: determining that the first terminal and the second terminal access the network through a same satellite or different satellites; and the second operation includes: sending the second message to the third core network function, where the second message is used to add the fourth core network function to a communication path, and the fourth core network function is a core network function configured to control a UPF included in a satellite. In this way, performing the first operation or the second operation facilitates enabling two UEs to perform USU calls, which helps shorten a communication path of the call and reduce the call latency.

The following describes how the first core network function determines whether UE1 and UE2 access the network through the same satellite or different satellites.

In some embodiments, the determining that the first terminal and the second terminal access a network through a same satellite or different satellites includes:
in a case that it is determined that a satellite in which the first terminal is located includes a UPF, determining, by the first core network function, that the first terminal and the second terminal access the network through a same satellite or different satellites.

Here, a satellite where UE1 is located including (or having) a UPF means that the UPF is placed or deployed on the satellite where UE1 is located. As described above, the satellite where UE1 is located including a UPF is a condition that needs to be satisfied for UE1 to perform a USU call with other UEs located in the same satellite.

Therefore, in this implementation, the first core network function may first determine whether the satellite where UE1 is located includes a UPF, and if the satellite where UE1 is located includes a UPF, then determine whether UE1 and UE2 access the network through the same satellite, which may avoid unnecessary related processing by the first core network function, thereby reducing unnecessary waste of resources.

It should be noted that the satellite where UE1 is located may alternatively be understood as the satellite including a base station function, and UE1 is connected to the base station on the satellite.

In some embodiments, the information related to the first terminal includes a first IP address, or the information related to the first terminal includes a first IP address and first port information;
the information related to the second terminal includes a second IP address, or the information related to the second terminal includes a second IP address and second port information; and
the determining that the first terminal and the second terminal access a network through a same satellite or different satellites includes at least one of the following:
   determining, based on the first IP address and the second IP address, that the first terminal and the second terminal access the network through a same satellite or different satellites; and
   determining, based on the first IP address and the first port information, and the second IP address and the second port information, that the first terminal and the second terminal access the network through a same satellite or different satellites.

As described above, the first message may carry a service data flow template, and the service data flow template may include information related to a source UE (that is, UE1) and information related to a destination UE (that is, UE2), such as a source IP (source IP, that is, a first IP address, IP1 for short), a target IP (target IP, that is, a second IP address, IP2 for short), a source port (source port, that is, first port information, port1 for short), and a destination port (target port, that is, second port information, port2 for short).

The first core network function may determine, based on IP1 and IP2, whether UE1 and UE2 access the network through the same satellite; or, determine, based on IP1+port1 and IP2+port2, whether UE1 and UE2 access the network through the same satellite. Multiple optional determination schemes are provided below.

Optionally, the determining, based on the first IP address and the second IP address, that the first terminal and the second terminal access the network through a same satellite or different satellites includes at least one of the following:
determining, based on an IP address range (IP range) corresponding to the first IP address and an IP address range corresponding to the second IP address, that the first terminal and the second terminal access the network through a same satellite or different satellites;
determining, based on realm (realm) information corresponding to the first IP address and realm information corresponding to the second IP address, that the first terminal and the second terminal access the network through a same satellite or different satellites;
determining a first CGI based on the first IP address, determining a second CGI based on the second IP address, and determining, based on the first CGI and the second CGI, that the first terminal and the second terminal access the network through a same satellite or different satellites;
determining an identifier of the first terminal based on the first IP address and determining a first CGI based on the identifier of the first terminal; determining an identifier of the second terminal based on the second IP address and determining a second CGI based on the identifier of the second terminal; and determining, based on the first CGI and the second CGI, that the first terminal and the second terminal access the network through a same satellite or different satellites;
determining a first satellite identifier (satellite identifier) based on the first IP address, determining a second satellite identifier based on the second IP address, and determining, based on the first satellite identifier and the second satellite identifier, that the first terminal and the second terminal access the network through a same satellite or different satellites; and
determining an identifier of the first terminal based on the first IP address and determining a first satellite identifier based on the identifier of the first terminal; determining an identifier of the second terminal based on the second IP address and determining a second satellite identifier based on the identifier of the second terminal; and determining, based on the first satellite identifier and the second satellite identifier, that the first terminal and the second terminal access the network through a same satellite or different satellites.

It should be noted that a UE may carry a private network IP address or a public network IP address when registering with IMS. The UE may alternatively include realm information corresponding to the IP address when registering with the IMS. Therefore, the IP address included in the service data flow template may be a public network IP address or a private network IP address. If it is a private network IP address, the first core network function may obtain a public network IP address corresponding to the private network IP address, or obtain realm information corresponding to the private network IP address.

It should be noted that the first core network function may directly determine a CGI based on an IP, or first determine an identifier corresponding to the UE, such as a subscription permanent identifier (Subscription Permanent Identifier, SUPI) or an international mobile subscriber identity (International Mobile Subscriber Identity, IMSI), and then determine a CGI based on the identifier corresponding to the UE.

It should be noted that the first core network function may determine a satellite identifier directly based on an IP, or first determine an identifier corresponding to a UE, such as a SUPI or an IMSI, and then determine a satellite identifier based on the identifier corresponding to the UE.

It should be noted that the first satellite identifier and the second satellite identifier may be sent to the first core network function by other core network functions (such as an AMF). For example, the AMF obtains a satellite identifier based on a base station identifier received from a base station (the AMF pre-stores an association relationship or correspondence between base station identifiers and satellite identifiers), or the AMF receives a satellite identifier from a base station, so as to obtain the satellite identifier.

Optionally, the determining, based on the first IP address and the first port information, and the second IP address and the second port information, that the first terminal and the second terminal access the network through a same satellite or different satellites includes at least one of the following:
determining a first CGI based on the first IP address and the first port information, determining a second CGI based on the second IP address and the second port information, and determining, based on the first CGI and the second CGI, that the first terminal and the second terminal access the network through a same satellite or different satellites;
determining an identifier of the first terminal based on the first IP address and the first port information, and determining a first CGI based on the identifier of the first terminal; determining an identifier of the second terminal based on the second IP address and the second port information, and determining a second CGI based on the identifier of the second terminal; and determining, based on the first CGI and the second CGI, that the first terminal and the second terminal access the network through a same satellite or different satellites;
determining a first satellite identifier based on the first IP address and the first port information, determining a second satellite identifier based on the second IP address and the second port information, and determining, based on the first satellite identifier and the second satellite identifier, that the first terminal and the second terminal access the network through a same satellite or different satellites; and
determining an identifier of the first terminal based on the first IP address and the first port information, and determining a first satellite identifier based on the identifier of the first terminal; determining an identifier of the second terminal based on the second IP address and the second port information, and determining a second satellite identifier based on the identifier of the second terminal; and determining, based on the first satellite identifier and the second satellite identifier, that the first terminal and the second terminal access the network through a same satellite or different satellites.

It should be noted that the first core network function may directly determine a CGI based on an IP+port, or first determine, based on an IP+port, an identifier corresponding to the UE, such as a SUPI or an IMSI, and then determine the CGI based on the identifier corresponding to the UE.

It should be noted that the first core network function may determine a satellite identifier directly based on an IP+port, or first determine, based on an IP+port, an identifier corresponding to a UE, such as a SUPI or an IMSI, and then determine a satellite identifier based on the identifier corresponding to the UE.

It should be noted that the first CGI is a CGI corresponding to the first terminal; and the second CGI is a CGI corresponding to the second terminal.

It should be noted that the first satellite identifier is a satellite identifier corresponding to the first terminal; and the second satellite identifier is a satellite identifier corresponding to the second terminal.

Optionally, the determining, based on an IP address range corresponding to the first IP address and an IP address range corresponding to the second IP address, that the first terminal and the second terminal access the network through a same satellite or different satellites includes:
in a case that the IP address range corresponding to the first IP address is the same as the IP address range corresponding to the second IP address, determining that the first terminal and the second terminal access the network through a same satellite.

Optionally, the determining, based on realm information corresponding to the first IP address and realm information corresponding to the second IP address, that the first terminal and the second terminal access the network through a same satellite or different satellites includes:
in a case that the realm information corresponding to the first IP address is the same as the realm information corresponding to the second IP address, determining that the first terminal and the second terminal access the network through a same satellite.

Optionally, the determining, based on the first CGI and the second CGI, that the first terminal and the second terminal access the network through a same satellite or different satellites includes any one of the following:
in a case that the first CGI is the same as the second CGI, determining that the first terminal and the second terminal access the network through a same satellite;
in a case that a base station corresponding to the first CGI is the same as a base station corresponding to the second CGI, determining that the first terminal and the second terminal access the network through a same satellite; and
in a case that a satellite corresponding to the first CGI is the same as a satellite corresponding to the second CGI, determining that the first terminal and the second terminal access the network through a same satellite.

It should be noted that the base station corresponding to the first CGI being the same as the base station corresponding to the second CGI may be understood as or replaced by a base station identifier corresponding to the first CGI being the same as a base station identifier corresponding to the second CGI.

It should be noted that the satellite corresponding to the first CGI being the same as the satellite corresponding to the second CGI may be understood as or replaced by a satellite identifier corresponding to the first CGI being the same as a satellite identifier corresponding to the second CGI.

Optionally, the determining, based on the first satellite identifier and the second satellite identifier, that the first terminal and the second terminal access the network through a same satellite or different satellites includes:
in a case that the first satellite identifier is the same as the second satellite identifier, determining that the first terminal and the second terminal access the network through a same satellite.

In some embodiments, the information related to the second terminal includes a second IP address, or the information related to the second terminal includes a second IP address and second port information; and
the determining that the first terminal and the second terminal access a network through a same satellite or different satellites includes at least one of the following:
determining, based on a third IP address and the second IP address, that the first terminal and the second terminal access the network through a same satellite or different satellites;
determining, based on a third CGI and the second IP address, that the first terminal and the second terminal access the network through a same satellite or different satellites;
determining, based on a third satellite identifier and the second IP address, that the first terminal and the second terminal access the network through a same satellite or different satellites;
determining, based on a third IP address and third port information, and the second IP address and the second port information, that the first terminal and the second terminal access the network through a same satellite or different satellites;
determining, based on a third CGI, the second IP address, and the second port information, that the first terminal and the second terminal access the network through a same satellite or different satellites; and
determining, based on a third satellite identifier, the second IP address, and the second port information, that the first terminal and the second terminal access the network through a same satellite or different satellites.

The third IP address is an IP address of the first terminal stored by the first core network function;
the third port information is port information of the first terminal stored by the first core network function;
the third CGI is a CGI of the first terminal stored by the first core network function; and
the third satellite identifier is an identifier, stored by the first core network function, of a satellite in which the first terminal is located.

That is, if the first core network function stores information related to UE1, it only needs to obtain information related to UE2 from the first message, and determine, based on the stored information related to UE1 and the obtained information related to UE2, whether UE1 and UE2 access the network through the same satellite. This manner can appropriately reduce overheads required for obtaining information by the first core network function.

Optionally, the first core network function may obtain information related to UE1 from the AMF and store it when UE1 establishes a PDU session or modifies a PDU session; or, the first core network function may obtain information related to UE1 from the AMF and store it when UE1 enters a connected state from an idle (idle) state. The same applies below and will not be reiterated.

Optionally, the determining, based on a third IP address and the second IP address, that the first terminal and the second terminal access the network through a same satellite or different satellites includes at least one of the following:
determining, based on an IP address range corresponding to the third IP address and an IP address range corresponding to the second IP address, that the first terminal and the second terminal access the network through a same satellite or different satellites;
determining, based on realm information corresponding to the third IP address and realm information corresponding to the second IP address, that the first terminal and the second terminal access the network through a same satellite or different satellites;
determining a third CGI based on the third IP address, determining a second CGI based on the second IP address, and determining, based on the third CGI and the second CGI, that the first terminal and the second terminal access the network through a same satellite or different satellites;
determining an identifier of the first terminal based on the third IP address, and determining a third CGI based on the identifier of the first terminal; determining an identifier of the second terminal based on the second IP address, and determining a second CGI based on the identifier of the second terminal; and determining, based on the third CGI and the second CGI, that the first terminal and the second terminal access the network through a same satellite or different satellites;
determining a third satellite identifier based on the third IP address, determining a second satellite identifier based on the second IP address, and determining, based on the third satellite identifier and the second satellite identifier, that the first terminal and the second terminal access the network through a same satellite or different satellites; and
determining an identifier of the first terminal based on the third IP address, and determining a third satellite identifier based on the identifier of the first terminal; determining an identifier of the second terminal based on the second IP address, and determining a second satellite identifier based on the identifier of the second terminal; and determining, based on the third satellite identifier and the second satellite identifier, that the first terminal and the second terminal access the network through a same satellite or different satellites.

Optionally, the determining, based on a third CGI and the second IP address, that the first terminal and the second terminal access the network through a same satellite or different satellites includes at least one of the following:
determining a second CGI based on the second IP address, and determining, based on the third CGI and the second CGI, that the first terminal and the second terminal access the network through a same satellite or different satellites; and
determining an identifier of the second terminal based on the second IP address, determining a second CGI based on the identifier of the second terminal, and determining, based on the third CGI and the second CGI, that the first terminal and the second terminal access the network through a same satellite or different satellites.

Optionally, the determining, based on a third CGI, the second IP address, and the second port information, that the first terminal and the second terminal access the network through a same satellite or different satellites includes at least one of the following:
determining a second CGI based on the second IP address and the second port information, and determining, based on the third CGI and the second CGI, that the first terminal and the second terminal access the network through a same satellite or different satellites; and
determining an identifier of the second terminal based on the second IP address and the second port information, determining a second CGI based on the identifier of the second terminal, and determining, based on the third CGI and the second CGI, that the first terminal and the second terminal access the network through a same satellite or different satellites.

Optionally, the determining, based on a third satellite identifier and the second IP address, that the first terminal and the second terminal access the network through a same satellite or different satellites includes at least one of the following:
determining a second satellite identifier based on the second IP address, and determining, based on the third satellite identifier and the second satellite identifier, that the first terminal and the second terminal access the network through a same satellite or different satellites; and
determining an identifier of the second terminal based on the second IP address, determining a second satellite identifier based on the identifier of the second terminal, and determining, based on the third satellite identifier and the second satellite identifier, that the first terminal and the second terminal access the network through a same satellite or different satellites.

Optionally, the determining, based on a third satellite identifier, the second IP address, and the second port information, that the first terminal and the second terminal access the network through a same satellite or different satellites includes at least one of the following:
determining a second satellite identifier based on the second IP address and the second port information, and determining, based on the third satellite identifier and the second satellite identifier, that the first terminal and the second terminal access the network through a same satellite or different satellites; and
determining an identifier of the second terminal based on the second IP address and the second port information, determining a second satellite identifier based on the identifier of the second terminal, and determining, based on the third satellite identifier and the second satellite identifier, that the first terminal and the second terminal access the network through a same satellite or different satellites.

Optionally, the determining, based on a third IP address and third port information, and the second IP address and the second port information, that the first terminal and the second terminal access the network through a same satellite or different satellites includes at least one of the following:
determining a third CGI based on the third IP address and the third port information, determining a second CGI based on the second IP address and the second port information, and determining, based on the third CGI and the second CGI, that the first terminal and the second terminal access the network through a same satellite or different satellites;
determining an identifier of the first terminal based on the third IP address and the third port information, and determining a third CGI based on the identifier of the first terminal; determining an identifier of the second terminal based on the second IP address and the second port information, and determining a second CGI based on the identifier of the second terminal; and determining, based on the third CGI and the second CGI, that the first terminal and the second terminal access the network through a same satellite or different satellites;
determining a third satellite identifier based on the third IP address and the third port information, determining a second satellite identifier based on the second IP address and the second port information, and determining, based on the third satellite identifier and the second satellite identifier, that the first terminal and the second terminal access the network through a same satellite or different satellites; and
determining an identifier of the first terminal based on the third IP address and the third port information, and determining a third satellite identifier based on the identifier of the first terminal; determining an identifier of the second terminal based on the second IP address and the second port information, and determining a second satellite identifier based on the identifier of the second terminal; and determining, based on the third satellite identifier and the second satellite identifier, that the first terminal and the second terminal access the network through a same satellite or different satellites.

Optionally, the determining, based on an IP address range corresponding to the third IP address and an IP address range corresponding to the second IP address, that the first terminal and the second terminal access the network through a same satellite or different satellites includes:
in a case that the IP address range corresponding to the third IP address is the same as the IP address range corresponding to the second IP address, determining that the first terminal and the second terminal access the network through a same satellite.

Optionally, the determining, based on realm information corresponding to the third IP address and realm information corresponding to the second IP address, that the first terminal and the second terminal access the network through a same satellite or different satellites includes:
in a case that the realm information corresponding to the third IP address is the same as the realm information corresponding to the second IP address, determining that the first terminal and the second terminal access the network through a same satellite.

Optionally, the determining, based on the third CGI and the second CGI, that the first terminal and the second terminal access the network through a same satellite or different satellites includes any one of the following:
in a case that the third CGI is the same as the second CGI, determining that the first terminal and the second terminal access the network through a same satellite;
in a case that a base station corresponding to the third CGI is the same as a base station corresponding to the second CGI, determining that the first terminal and the second terminal access the network through a same satellite; and
in a case that a satellite corresponding to the third CGI is the same as a satellite corresponding to the second CGI, determining that the first terminal and the second terminal access the network through a same satellite.

Optionally, the determining, based on the third satellite identifier and the second satellite identifier, that the first terminal and the second terminal access the network through a same satellite or different satellites includes:
in a case that the third satellite identifier is the same as the second satellite identifier, determining that the first terminal and the second terminal access the network through a same satellite.

For the rest, reference may be made to related descriptions in the foregoing embodiments. To avoid repetition, details are not described herein again.

In some embodiments, in a case that the first message further includes first information or second information, the determining that the first terminal and the second terminal access the network through a same satellite or different satellites includes:
determining, based on the first information or the second information, that the first terminal and the second terminal access the network through a same satellite.

The first information includes information for indicating a USU service.

The second information is used to indicate that the first terminal and the second terminal access the network through a same satellite, or to indicate that the first terminal and the second terminal are under the same satellite (under the same satellite) or under coverage of one serving satellite (under the coverage of one serving satellite), or the second information is used to indicate performing a local switching (Local Switch) for the first terminal and the second terminal, or the second information is used to indicate performing a local switching.

For example, the information for indicating a USU service may be a data network access identifier (Data Network Access Identifier, DNAI) corresponding to the USU service. That is, the first message may carry a DNAI, and the DNAI is a DNAI corresponding to the USU service, meaning that the DNAI may indicate the USU service.

It should be noted that the USU service in the present application may alternatively be understood as or replaced by a USU call service, a USU voice service, a USU data service, or a USU network service. The same applies below and will not be reiterated.

It should be noted that local switch may alternatively be understood as or replaced by local routing (Local Routing). The same applies below and will not be reiterated.

As described above, the first message may carry the first information, that is, in a case that the first message includes the first information, the first core network function may directly determine that UE1 and UE2 access the network through the same satellite.

The second core network function (such as a PCF) may determine, based on indication information sent by other core network functions (such as a P-CSCF), to send the first information to the first core network function; or may determine, based on the source IP and target IP (or Source IP, source port, target IP, and target port) in the fDescs sent by the P-CSCF, to send the first information to the first core network function.

For example, the PCF determines a CGI based on an IP (or IP+port), and determines, based on the CGI, whether UE1 and UE2 are under coverage of one serving satellite. The PCF may determine the CGI based on locally stored information, or the PCF may obtain the CGI from the SMF.

For example, the PCF determines a satellite identifier based on an IP (or IP+port), and determines, based on the satellite identifier, whether UE1 and UE2 are under coverage of one serving satellite. The PCF may determine the satellite identifier based on locally stored information, or the PCF may obtain the satellite identifier from the SMF.

For example, based on whether the IPs of UE1 and UE2 belong to a same range or realm, the PCF determines whether UE1 and UE2 are under coverage of one serving satellite.

The foregoing describes how the first core network function determines whether UE1 and UE2 access the network through the same satellite or different satellites. The following describes subsequent operations performed by the first core network function.

In some embodiments, in a case that it is determined that the first terminal and the second terminal access the network through a same satellite, the method further includes at least one of the following:
adding (add or insert), by the first core network function, a UPF included in a target satellite as a protocol data unit session anchor (PDU Session Anchor, PSA) to a PDU session;
adding (add or insert), by the first core network function, a UPF included in a target satellite as an uplink classifier (Uplink Classifier, UL CL) to a PDU session;
sending, by the first core network function, a third message to the UPF included in the target satellite, where the third message is used for establishing a voice bearer for the first terminal;
sending, by the first core network function, third information to the UPF included in the target satellite, where the third information includes a local forwarding rule;
sending, by the first core network function, a fourth message to the third core network function, where the fourth message is used to add a fourth core network function to a communication path; and
sending, by the first core network function, a fifth message to the fourth core network function, where the fifth message is used for establishing a voice bearer for the first terminal.

The target satellite is a satellite where the first terminal and the second terminal are located.

In this implementation, control on the UPF included in the target satellite may be implemented by the first core network function, or may be implemented by a fourth core network function (such as an I-SMF) specifically configured to control the UPF included in the satellite.

Controlling the UPF included in the target satellite may include: adding the UPF included in the target satellite as a PSA to a PDU session, or adding the UPF included in the target satellite as a UL CL to a PDU session.

Adding the UPF included in the target satellite as a PSA to a PDU session may be understood as the UPF included in the target satellite having a logical function of the PSA. In other words, the UPF included in the target satellite is used as a new PSA. For example, a new PSA may be established for the PDU session via N4. In other words, the UPF included in the target satellite is selected and used as a new PSA for the PDU session.

For ease of distinction, a PSA corresponding to the original UPF may be referred to as PSA1, and the PSA corresponding to the UPF included in the target satellite may be referred to as PSA2.

On the basis of using the UPF included in the satellite as PSA2, third information containing local forwarding rules (local forwarding rules) may alternatively be sent to PSA2. For example, this rule may be generated based on the source IP and target IP (or Source IP, source port, target IP, and target port) in the service data flow template. The local forwarding rule may be, for example: directly forwarding or sending a data packet with the source address being IP1 and the target address being IP2 to UE2; or directly forwarding or sending a data packet with the source address being IP1+port1 and the target address being IP2+port2 to UE2.

On the basis of using the UPF included in the satellite as PSA2, a third message (such as an N4 session modification request) may alternatively be sent to PSA2 to establish a voice bearer (such as a QoS flow) for UE1.

It should be noted that the third message is used to request or indicate the UPF to allocate resources for a voice bearer, for example, tunnel (tunnel)-related resources. The third message belongs to one step for establishing a voice bearer for UE1.

Adding the UPF included in the target satellite as a UL CL to a PDU session may be understood as the UPF included in the target satellite having a logical function of the UL CL. In other words, the UPF included in the target satellite is used as a new UL CL. In other words, the UPF included in the target satellite is selected and used as a new UL CL for the PDU session. For example, a new UL CL may be established for the PDU session via N4.

In a case that the UPF included in the target satellite is added as a PSA to a PDU session and the UPF included in the target satellite is added as a UL CL to a PDU session, the UPF included in the target satellite has two logical functions: the PSA and the UL CL.

Adding the UPF included in the target satellite as a PSA to a PDU session and adding the UPF included in the target satellite as a UL CL to a PDU session may be implemented by one message or by two messages, which is not limited in the embodiments of the present application.

In addition, the first core network function may alternatively update an N4 connection of PSA1 to establish a connection between PSA1 and the UL CL.

The first core network function may alternatively send a PDU session modification command to the third core network function to establish a voice QoS flow. The third core network function may send a PDU session modification command to UE1 to establish a voice QoS flow.

The above describes the related operations of the first core network function controlling the UPF included in the target satellite. By performing the above operations, USU calls can be implemented through the UPF in the satellite, thereby shortening call latency.

As described above, control on the UPF included in the target satellite may be implemented by the fourth core network function specifically configured to control the UPF included in the satellite. In this case, the first core network function does not need to perform operations related to controlling the UPF included in the target satellite, but instead determines to insert the fourth core network function. In a case that it is determined to insert the fourth core network function, the first core network function sends a fourth message to the third core network function (such as an AMF), and the fourth message is used to add the fourth core network function to the communication path.

The fourth message may be, for example, an SM context status notification (Nsmf_PDUSession_SMContextStatusNotify). Optionally, the fourth message may include first information for indicating a USU service.

For the third core network function, it may select, based on the fourth message, a specific fourth core network function capable of controlling the UPF included in the target satellite.

For example, the fourth message may carry a DNAI, and the DNAI is a DNAI corresponding to the USU service, meaning that the DNAI may indicate the USU service. The third core network function selects a fourth core network function that may provide services for the DNAI, and sends a create SM context request (Nsmf_PDUSession_CreateSMContext) to the selected fourth core network function.

For the fourth core network function, it may request the context of UE1 from the first core network function, and the context of UE1 may include a CGI or a satellite identifier.

The first core network function may alternatively send a fifth message to the fourth core network function, and the fifth message is used for establishing a voice bearer for the first terminal. The fifth message may be, for example, an update request (Nsmf_PDUSession_Update Request), used to establish a voice QoS flow, and the request may carry a service data flow template.

From the above implementation, it can be seen that the first core network function may perform the operation (corresponding to the first operation) of determining whether UE1 and UE2 access the network through the same satellite. After determining that UE1 and UE2 access the network through the same satellite, the first core network function may alternatively perform operations related to controlling the UPF included in the satellite; or not perform operations related to controlling the UPF included in the satellite, but instead determine to insert the fourth core network function (corresponding to the second operation).

In the embodiments of the present application, there is another scenario, that is, in a case that the first message further includes first information for indicating a USU service, the first core network function may not perform the operation of determining whether UE1 and UE2 access the network through the same satellite, but directly determine to insert the fourth core network function. In this case, the first core network function performs less work, and the functional enhancement is mainly in the fourth core network function. The following describes the related behavior of the first core network function in this case.

In some embodiments, the performing, by the first core network function, a first operation or a second operation based on the first message includes:
in a case that the first message further includes first information for indicating a USU service, performing, by the first core network function, the second operation.

The second message includes information for indicating a USU service.

For example, the second message may carry a DNAI, and the DNAI is a DNAI corresponding to the USU service, meaning that the DNAI may indicate the USU service.

It should be noted that the meanings of the second message and the fourth message are the same, and both are messages sent by the first core network function to the third core network function to indicate insertion of the fourth core network function. The distinction between the second message and the fourth message here lies in a difference in their prerequisites for sending and their timing of sending. The prerequisite for sending the second message is that the first message includes the first information. The prerequisite for sending the fourth message is that the first core network function has already performed the operation of determining whether UE1 and UE2 access the network through the same satellite, and has determined that UE1 and UE2 access the network through the same satellite.

The above describes the related behavior on the first core network function side, and the following describes the related behaviors on the second core network function side.

FIG. 4 is a flowchart of a communication method according to an embodiment of the present application. As shown in FIG. 4, the communication method includes the following steps.

Step 401: A second core network function receives a sixth message from a fifth core network function, where the sixth message includes information related to a first terminal and information related to a second terminal.

Step 402: The second core network function determines that the first terminal and the second terminal access a network through a same satellite or different satellites.

Optionally, the method further includes:
sending, by the second core network function, a first message to a first core network function, in a case that it is determined that the first terminal and the second terminal access the network through a same satellite.

The first message is used for establishing a voice bearer for the first terminal, the first message includes information related to the first terminal and information related to the second terminal, the first message further includes first information, and the first information includes information for indicating a terminal-satellite-terminal USU service.

Optionally, the determining, by the second core network function, that the first terminal and the second terminal access a network through a same satellite or different satellites includes:
in a case that the sixth message further includes second information, determining, by the second core network function, that the first terminal and the second terminal access the network through a same satellite.

The second information is used to indicate that the first terminal and the second terminal access a network through a same satellite, or to indicate performing a local switching for the first terminal and the second terminal, or to indicate performing a local switching.

Optionally, the information related to the first terminal includes a first Internet protocol IP address, or the information related to the first terminal includes a first IP address and first port information;
the information related to the second terminal includes a second IP address, or the information related to the second terminal includes a second IP address and second port information; and
the determining, by the second core network function, that the first terminal and the second terminal access a network through a same satellite or different satellites includes at least one of the following:
   determining, by the second core network function based on the first IP address and the second IP address, that the first terminal and the second terminal access the network through a same satellite or different satellites; and
   determining, by the second core network function based on the first IP address and the first port information, and the second IP address and the second port information, that the first terminal and the second terminal access the network through a same satellite or different satellites.

Optionally, the determining, by the second core network function based on the first IP address and the second IP address, that the first terminal and the second terminal access the network through a same satellite or different satellites includes at least one of the following:
determining, by the second core network function based on an IP address range corresponding to the first IP address and an IP address range corresponding to the second IP address, that the first terminal and the second terminal access the network through a same satellite or different satellites;
determining, by the second core network function based on realm information corresponding to the first IP address and realm information corresponding to the second IP address, that the first terminal and the second terminal access the network through a same satellite or different satellites;
determining, by the second core network function, a first cell global identity CGI based on the first IP address, determining a second CGI based on the second IP address, and determining, based on the first CGI and the second CGI, that the first terminal and the second terminal access the network through a same satellite or different satellites;
determining, by the second core network function, an identifier of the first terminal based on the first IP address and the first port information, and determining a first CGI based on the identifier of the first terminal; determining an identifier of the second terminal based on the second IP address and the second port information, and determining a second CGI based on the identifier of the second terminal; and determining, based on the first CGI and the second CGI, that the first terminal and the second terminal access the network through a same satellite or different satellites;
determining, by the second core network function, a first satellite identifier based on the first IP address, determining a second satellite identifier based on the second IP address, and determining, based on the first satellite identifier and the second satellite identifier, that the first terminal and the second terminal access the network through a same satellite or different satellites; and
determining, by the second core network function, an identifier of the first terminal based on the first IP address and the first port information, and determining a first satellite identifier based on the identifier of the first terminal; determining an identifier of the second terminal based on the second IP address and the second port information, and determining a second satellite identifier based on the identifier of the second terminal; and determining, based on the first satellite identifier and the second satellite identifier, that the first terminal and the second terminal access the network through a same satellite or different satellites.

Optionally, the determining, by the second core network function based on the first IP address and the first port information, and the second IP address and the second port information, that the first terminal and the second terminal access the network through a same satellite or different satellites includes at least one of the following:
determining, by the second core network function, a first CGI based on the first IP address and the first port information, determining a second CGI based on the second IP address and the second port information, and determining, based on the first CGI and the second CGI, that the first terminal and the second terminal access the network through a same satellite or different satellites;
determining, by the second core network function, an identifier of the first terminal based on the first IP address and the first port information, and determining a first CGI based on the identifier of the first terminal; determining an identifier of the second terminal based on the second IP address and the second port information, and determining a second CGI based on the identifier of the second terminal; and determining, based on the first CGI and the second CGI, that the first terminal and the second terminal access the network through a same satellite or different satellites;
determining, by the second core network function, a first satellite identifier based on the first IP address and the first port information, determining a second satellite identifier based on the second IP address and the second port information, and determining, based on the first satellite identifier and the second satellite identifier, that the first terminal and the second terminal access the network through a same satellite or different satellites; and
determining, by the second core network function, an identifier of the first terminal based on the first IP address and the first port information, and determining a first satellite identifier based on the identifier of the first terminal; determining an identifier of the second terminal based on the second IP address and the second port information, and determining a second satellite identifier based on the identifier of the second terminal; and determining, based on the first satellite identifier and the second satellite identifier, that the first terminal and the second terminal access the network through a same satellite or different satellites.

Optionally, the determining, by the second core network function based on an IP address range corresponding to the first IP address and an IP address range corresponding to the second IP address, that the first terminal and the second terminal access the network through a same satellite or different satellites includes:
in a case that the IP address range corresponding to the first IP address is the same as the IP address range corresponding to the second IP address, determining, by the second core network function, that the first terminal and the second terminal access the network through a same satellite.

Optionally, the determining, by the second core network function based on realm information corresponding to the first IP address and realm information corresponding to the second IP address, that the first terminal and the second terminal access the network through a same satellite or different satellites includes:
in a case that the realm information corresponding to the first IP address is the same as the realm information corresponding to the second IP address, determining, by the second core network function, that the first terminal and the second terminal access the network through a same satellite.

Optionally, the determining, based on the first CGI and the second CGI, that the first terminal and the second terminal access the network through a same satellite or different satellites includes any one of the following:
in a case that the first CGI is the same as the second CGI, determining that the first terminal and the second terminal access the network through a same satellite;
in a case that a base station corresponding to the first CGI is the same as a base station corresponding to the second CGI, determining that the first terminal and the second terminal access the network through a same satellite; and
in a case that a satellite corresponding to the first CGI is the same as a satellite corresponding to the second CGI, determining that the first terminal and the second terminal access the network through a same satellite.

It should be noted that the base station corresponding to the first CGI being the same as the base station corresponding to the second CGI may be understood as or replaced by a base station identifier corresponding to the first CGI being the same as a base station identifier corresponding to the second CGI.

It should be noted that the satellite corresponding to the first CGI being the same as the satellite corresponding to the second CGI may be understood as or replaced by a satellite identifier corresponding to the first CGI being the same as a satellite identifier corresponding to the second CGI.

Optionally, the determining, based on the first satellite identifier and the second satellite identifier, that the first terminal and the second terminal access the network through a same satellite or different satellites includes:
in a case that the first satellite identifier is the same as the second satellite identifier, determining that the first terminal and the second terminal access the network through a same satellite.

Optionally, the information related to the second terminal includes a second IP address, or the information related to the second terminal includes a second IP address and second port information; and
the determining, by the second core network function, that the first terminal and the second terminal access a network through a same satellite or different satellites includes at least one of the following:
determining, by the second core network function based on a third IP address and the second IP address, that the first terminal and the second terminal access the network through a same satellite or different satellites;
determining, by the second core network function based on a third CGI and the second IP address, that the first terminal and the second terminal access the network through a same satellite or different satellites;
determining, by the second core network function based on a third satellite identifier and the second IP address, that the first terminal and the second terminal access the network through a same satellite or different satellites;
determining, by the second core network function based on a third IP address and third port information, and the second IP address and the second port information, that the first terminal and the second terminal access the network through a same satellite or different satellites;
determining, by the second core network function based on a third CGI, the second IP address, and the second port information, that the first terminal and the second terminal access the network through a same satellite or different satellites; and
determining, by the second core network function based on a third satellite identifier, the second IP address, and the second port information, that the first terminal and the second terminal access the network through a same satellite or different satellites.

The third IP address is an IP address of the first terminal stored by the second core network function;
the third port information is port information of the first terminal stored by the second core network function;
the third CGI is a CGI of the first terminal stored by the second core network function; and
the third satellite identifier is an identifier, stored by the second core network function, of a satellite in which the first terminal is located.

That is, if the second core network function stores information related to UE1, it only needs to obtain information related to UE2 from the sixth message, and determine, based on the stored information related to UE1 and the obtained information related to UE2, whether UE1 and UE2 access the network through the same satellite. This manner can appropriately reduce overheads required for obtaining information by the second core network function.

Optionally, the second core network function may obtain information related to UE1 from the AMF or the SMF and store it when UE1 establishes a PDU session or modifies a PDU session; or, the second core network function may obtain information related to UE1 from the AMF or the SMF and store it when UE1 enters a connected state from an idle (idle) state. The same applies below and will not be reiterated.

Optionally, the determining, by the second core network function based on a third IP address and the second IP address, that the first terminal and the second terminal access the network through a same satellite or different satellites includes at least one of the following:
determining, by the second core network function based on an IP address range corresponding to the third IP address and an IP address range corresponding to the second IP address, that the first terminal and the second terminal access the network through a same satellite or different satellites;
determining, by the second core network function based on realm information corresponding to the third IP address and realm information corresponding to the second IP address, that the first terminal and the second terminal access the network through a same satellite or different satellites;
determining, by the second core network function, a third CGI based on the third IP address, determining a second CGI based on the second IP address, and determining, based on the third CGI and the second CGI, that the first terminal and the second terminal access the network through a same satellite or different satellites;
determining, by the second core network function, an identifier of the first terminal based on the third IP address, and determining a third CGI based on the identifier of the first terminal; determining an identifier of the second terminal based on the second IP address, and determining a second CGI based on the identifier of the second terminal; and determining, based on the third CGI and the second CGI, that the first terminal and the second terminal access the network through a same satellite or different satellites;
determining, by the second core network function, a third satellite identifier based on the third IP address, determining a second satellite identifier based on the second IP address, and determining, based on the third satellite identifier and the second satellite identifier, that the first terminal and the second terminal access the network through a same satellite or different satellites; and
determining, by the second core network function, an identifier of the first terminal based on the third IP address, and determining a third satellite identifier based on the identifier of the first terminal; determining an identifier of the second terminal based on the second IP address, and determining a second satellite identifier based on the identifier of the second terminal; and determining, based on the third satellite identifier and the second satellite identifier, that the first terminal and the second terminal access the network through a same satellite or different satellites.

Optionally, the determining, by the second core network function based on a third CGI and the second IP address, that the first terminal and the second terminal access the network through a same satellite or different satellites includes at least one of the following:
determining, by the second core network function, a second CGI based on the second IP address, and determining, based on the third CGI and the second CGI, that the first terminal and the second terminal access the network through a same satellite or different satellites; and
determining, by the second core network function, an identifier of the second terminal based on the second IP address, determining a second CGI based on the identifier of the second terminal, and determining, based on the third CGI and the second CGI, that the first terminal and the second terminal access the network through a same satellite or different satellites.

Optionally, the determining, by the second core network function based on a third CGI, the second IP address, and the second port information, that the first terminal and the second terminal access the network through a same satellite or different satellites includes at least one of the following:
determining, by the second core network function, a second CGI based on the second IP address and the second port information, and determining, based on the third CGI and the second CGI, that the first terminal and the second terminal access the network through a same satellite or different satellites; and
determining, by the second core network function, an identifier of the second terminal based on the second IP address and the second port information, determining a second CGI based on the identifier of the second terminal, and determining, based on the third CGI and the second CGI, that the first terminal and the second terminal access the network through a same satellite or different satellites.

Optionally, the determining, by the second core network function based on a third satellite identifier and the second IP address, that the first terminal and the second terminal access the network through a same satellite or different satellites includes at least one of the following:
determining, by the second core network function, a second satellite identifier based on the second IP address, and determining, based on the third satellite identifier and the second satellite identifier, that the first terminal and the second terminal access the network through a same satellite or different satellites; and
determining, by the second core network function, an identifier of the second terminal based on the second IP address, determining a second satellite identifier based on the identifier of the second terminal, and determining, based on the third satellite identifier and the second satellite identifier, that the first terminal and the second terminal access the network through a same satellite or different satellites.

Optionally, the determining, by the second core network function based on a third satellite identifier, the second IP address, and the second port information, that the first terminal and the second terminal access the network through a same satellite or different satellites includes at least one of the following:
determining, by the second core network function, a second satellite identifier based on the second IP address and the second port information, and determining, based on the third satellite identifier and the second satellite identifier, that the first terminal and the second terminal access the network through a same satellite or different satellites; and
determining, by the second core network function, an identifier of the second terminal based on the second IP address and the second port information, determining a second satellite identifier based on the identifier of the second terminal, and determining, based on the third satellite identifier and the second satellite identifier, that the first terminal and the second terminal access the network through a same satellite or different satellites.

Optionally, the determining, by the second core network function based on a third IP address and third port information, and the second IP address and the second port information, that the first terminal and the second terminal access the network through a same satellite or different satellites includes at least one of the following:
determining, by the second core network function, a third CGI based on the third IP address and the third port information, determining a second CGI based on the second IP address and the second port information, and determining, based on the third CGI and the second CGI, that the first terminal and the second terminal access the network through a same satellite or different satellites;
determining, by the second core network function, an identifier of the first terminal based on the third IP address and the third port information, and determining a third CGI based on the identifier of the first terminal; determining an identifier of the second terminal based on the second IP address and the second port information, and determining a second CGI based on the identifier of the second terminal; and determining, based on the third CGI and the second CGI, that the first terminal and the second terminal access the network through a same satellite or different satellites;
determining, by the second core network function, a third satellite identifier based on the third IP address and the third port information, determining a second satellite identifier based on the second IP address and the second port information, and determining, based on the third satellite identifier and the second satellite identifier, that the first terminal and the second terminal access the network through a same satellite or different satellites; and
determining, by the second core network function, an identifier of the first terminal based on the third IP address and the third port information, and determining a third satellite identifier based on the identifier of the first terminal; determining an identifier of the second terminal based on the second IP address and the second port information, and determining a second satellite identifier based on the identifier of the second terminal; and determining, based on the third satellite identifier and the second satellite identifier, that the first terminal and the second terminal access the network through a same satellite or different satellites.

Optionally, the determining, by the second core network function based on an IP address range corresponding to the third IP address and an IP address range corresponding to the second IP address, that the first terminal and the second terminal access the network through a same satellite or different satellites includes:
in a case that the IP address range corresponding to the third IP address is the same as the IP address range corresponding to the second IP address, determining, by the second core network function, that the first terminal and the second terminal access the network through a same satellite.

Optionally, the determining, by the second core network function based on realm information corresponding to the third IP address and realm information corresponding to the second IP address, that the first terminal and the second terminal access the network through a same satellite or different satellites includes:
in a case that the realm information corresponding to the third IP address is the same as the realm information corresponding to the second IP address, determining, by the second core network function, that the first terminal and the second terminal access the network through a same satellite.

Optionally, the determining, based on the third CGI and the second CGI, that the first terminal and the second terminal access the network through a same satellite or different satellites includes any one of the following:
in a case that the third CGI is the same as the second CGI, determining that the first terminal and the second terminal access the network through a same satellite;
in a case that a base station corresponding to the third CGI is the same as a base station corresponding to the second CGI, determining that the first terminal and the second terminal access the network through a same satellite; and
in a case that a satellite corresponding to the third CGI is the same as a satellite corresponding to the second CGI, determining that the first terminal and the second terminal access the network through a same satellite.

Optionally, the determining, based on the third satellite identifier and the second satellite identifier, that the first terminal and the second terminal access the network through a same satellite or different satellites includes:
in a case that the third satellite identifier is the same as the second satellite identifier, determining that the first terminal and the second terminal access the network through a same satellite.

For related descriptions in this embodiment of the present application, reference may be made to the related descriptions in the method embodiment of FIG. 3, with the same technical effects achieved. To avoid repetition, details are not described herein again.

The following describes the related behaviors on the fourth core network function side.

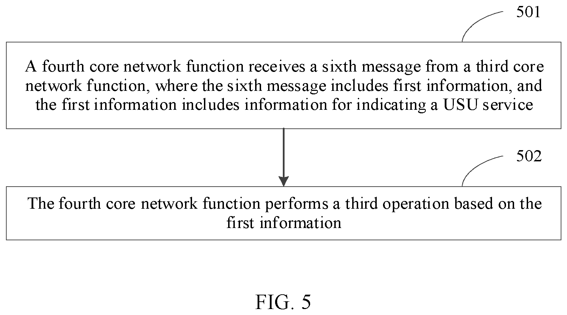

FIG. 5 is a flowchart of a communication method according to an embodiment of the present application. As shown in FIG. 5, the communication method includes the following steps.

Step 501: A fourth core network function receives a sixth message from a third core network function, where the sixth message includes first information, and the first information includes information for indicating a USU service.

Step 502: The fourth core network function performs a third operation based on the first information.

The third operation includes at least one of the following:
adding a UPF of a target satellite as a PSA to a PDU session;
adding the UPF of the target satellite as an UL CL to a PDU session;
sending a seventh message to the UPF of the target satellite, where the seventh message is used to indicate establishing a voice bearer for a first terminal; and
sending third information to the UPF of the target satellite, where the third information includes a local forwarding rule.

The target satellite is a satellite where the first terminal and a second terminal are located.

For related descriptions in this embodiment of the present application, reference may be made to the related descriptions in the method embodiment of FIG. 3, with the same technical effects achieved. To avoid repetition, details are not described herein again.

The following provides specific embodiments to illustrate embodiments of the present application by using examples in which the first core network function is an SMF, the second core network function is a PCF, the third core network function is an AMF, and the fourth core network function is an I-SMF.

Embodiment 1: The SMF determines whether UE1 and UE2 access a network through a same satellite.

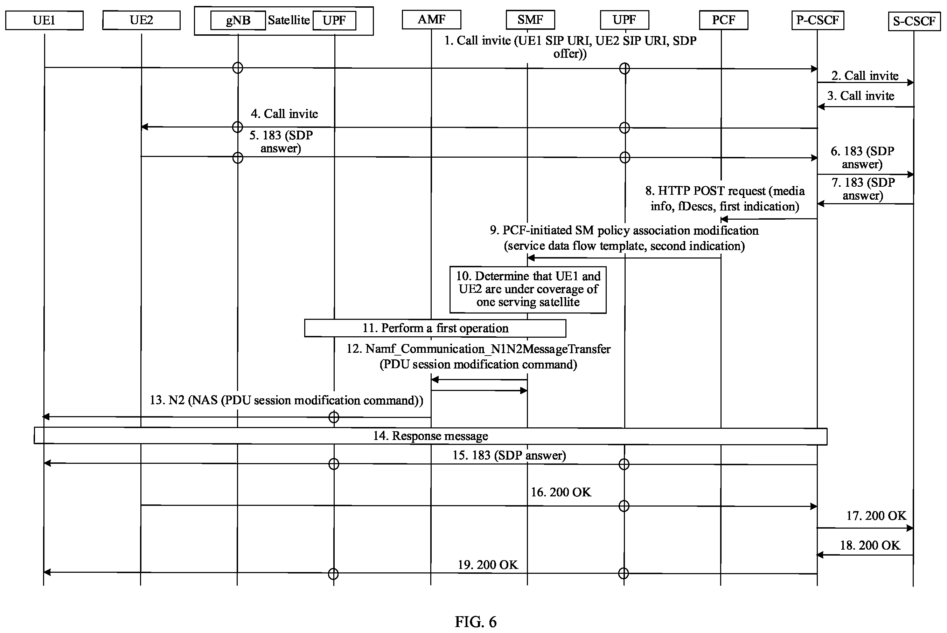

As shown in FIG. 6, the following steps are included.

8. Based on an SDP offer and an SDP answer, a P-CSCF generates media information corresponding to voice media.

Optionally, the P-CSCF sends a first indication to the PCF, where the first indication is used to indicate that UE1 and UE2 are under coverage of one serving satellite (under the coverage of one serving satellite); or to indicate performing a local switching for UE1 and UE2; or to indicate performing a local switching.

9. The PCF sends a PCF-initiated SM policy association modification (PCF initiated SM policy association modification) message to the SMF.

Optionally, the PCF sends a second indication to the SMF. The second indication may be the same as or different from the first indication.

10. In a case that the SMF determines that the message in step 9 is used for establishing a voice QoS flow for UE1, the SMF determines whether UE1 and UE2 are under coverage of one serving satellite. The judgment method is as follows:
Method 1: The SMF performs determining based on a source IP and a target IP in the service data flow template, or based on a source IP, a source port, a target IP, and a target port in the service data flow template.
Method 1.1: The SMF determines a CGI based on the IP or IP+port, and determines, based on the CGI, that UE1 and UE2 are under coverage of one serving satellite.

Optionally, the SMF first determines a UE identifier such as SUPI based on the IP or IP+port, and then determines the CGI based on the UE identifier.

Method 1.2: Based on whether the IPs of UE1 and UE2 belong to a same range or realm, the SMF determines that UE1 and UE2 are under coverage of one serving satellite.

Method 2: The SMF performs determining based on the second indication sent by the PCF.

The second indication is used to indicate that UE1 and UE2 are under coverage of one serving satellite; or, the second indication may be a DNAI, and the DNAI is a DNAI corresponding to the USU service, meaning that the DNAI may indicate a USU voice service or a USU network service.

Scheme 1: The PCF determines based on the first indication to send the second indication to the SMF.

Scheme 2: The PCF determines, based on the source IP and target IP in the fDescs, to send the second indication to the SMF; or the PCF determines, based on the source IP, source port, target IP, and target port in the fDescs, to send the second indication to the SMF.

Scheme 2.1: The PCF determines a CGI based on the IP or IP+port, and determines, based on the CGI, that UE1 and UE2 are under coverage of one serving satellite. The PCF performs determining based on locally stored information, or the PCF obtains the CGI from the SMF.

Scheme 2.2: Based on whether the IPs of UE1 and UE2 belong to the same range or realm, the PCF determines that UE1 and UE2 are under coverage of one serving satellite.

Optionally, in a case that it is determined that the satellite where UE1 is located includes a UPF, the SMF determines whether UE1 and UE2 are under coverage of one serving satellite.

11. The SMF performs subsequent operations. For subsequent operations, refer to Embodiment 2 and Embodiment 3.

For remaining steps in FIG. 6, refer to the related descriptions in FIG. 2.

Embodiment 2: The SMF controls the UPF of the satellite.

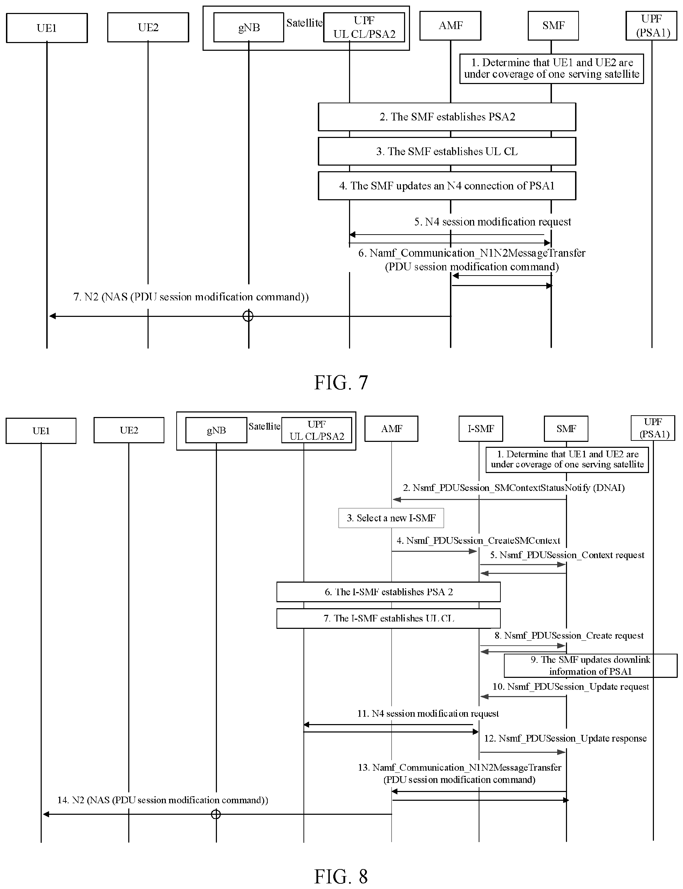

As shown in FIG. 7, the following steps are included.
1. The SMF determines that UE1 and UE2 are under coverage of one serving satellite (refer to the related description of step 10 in Embodiment 1, that is, step 1 in FIG. 7 is step 10 in FIG. 6).
2. The SMF uses the UPF included in the satellite as a new PSA, and the SMF establishes a new PDU session Anchor 2 for the PDU session via N4.

Optionally, the SMF sends local forwarding rules to PSA 2, and the rule is generated based on the source IP and target IP (or Source IP, source port, target IP, and target port) in the service data flow template.

For example, a data packet with the source address being IP1 and the target address being IP2 is directly forwarded to UE2; or a data packet with the source address being IP1+port1 and the target address being IP2+port2 is directly forwarded to UE2.

This new PSA is abbreviated as PSA 2, and the original UPF is abbreviated as PSA 1.

Note: The service data flow template is sent by the PCF to the SMF in step 9 of FIG. 6.

3. The SMF uses the UPF included in the satellite as a UL CL, and the SMF establishes a new UL CL for the PDU session via N4.

Note: The UPF on the satellite has 2 logical functions: PSA2 and UL CL.

Steps 2 and 3 may alternatively be implemented by one message.

4. The SMF updates the N4 connection of PSA1 to establish a connection between PSA1 and the UL CL.

5. The SMF sends an N4 session modification request to PSA2 to establish a voice QoS flow for UE1.

6. The SMF sends a PDU session modification command to the AMF to establish a voice QoS flow.

7. The AMF sends a PDU session modification command to UE1 to establish a voice QoS flow.

Embodiment 3: The SMF determines whether UE1 and UE2 access the network through a same satellite, and the I-SMF controls the UPF of the satellite.

As shown in FIG. 8, the following steps are included.
1. The SMF determines that UE1 and UE2 are under coverage of one serving satellite (refer to the related description of step 10 in Embodiment 1, that is, step 1 in FIG. 8 is step 10 in FIG. 6).
2. The SMF determines to insert an I-SMF, for controlling the UPF within the satellite.

The SMF sends an SM context status notification (Nsmf_PDUSession_SMContextStatusNotify) to the AMF, carrying specific DNAI information.

The specific DNAI is a DNAI corresponding to a USU service, meaning that this DNAI may indicate a USU voice service or a USU network service.

3. The AMF selects an I-SMF that may provide services for the specific DNAI.

4. The AMF sends a create SM context request (Nsmf_PDUSession_CreateSMContext) to the I-SMF.

5. The I-SMF requests a UE context from the SMF, and the UE context includes a CGI or a satellite identifier.

6. The I-SMF uses the UPF included in the satellite as a new PSA, and the I-SMF establishes a new PDU session Anchor 2 for the PDU session via N4.

The I-SMF determines the UPF included in the satellite based on the CGI or the satellite identifier.

The new PSA is abbreviated as PSA2, and the original UPF is abbreviated as PSA1.

7. The I-SMF uses the UPF included in the satellite as a UL CL, and the I-SMF establishes a new UL CL for the PDU session via N4.

Note: The UPF on the satellite has 2 logical functions: PSA2 and UL CL.

Steps 6 and 7 may alternatively be implemented by one message.

8. The I-SMF sends a create request (Nsmf_PDUSession_Create request) to the SMF.

9. The SMF updates downlink information of PSA1 to establish a connection between PSA1 and the UL CL.

10. The SMF sends an update request (Nsmf_PDUSession_Update request) to the I-SMF to establish a voice QoS flow, and the request carries a service data flow template.

Note: The service data flow template is sent by the PCF to the SMF in step 9 of FIG. 6.

11. The I-SMF sends an N4 session modification request to PSA2 to establish a voice QoS flow.

Optionally, the I-SMF sends local forwarding rules to PSA2, and the rule is generated based on the source IP and target IP (or Source IP, source port, target IP, and target port) in the service data flow template.

For example, a data packet with the source address being IP1 and the target address being IP2 is directly forwarded to UE2; or a data packet with the source address being IP1+port1 and the target address being IP2+port2 is directly forwarded to UE2.

12. The I-SMF sends a response message (Nsmf_PDUSession_Update response) to the AMF.

13. The SMF sends a PDU session modification command to the AMF to establish a voice QoS flow.

14. The AMF sends a PDU session modification command to UE1 to establish a voice QoS flow.

Embodiment 4: The I-SMF determines whether UE1 and UE2 access the network through a same satellite.

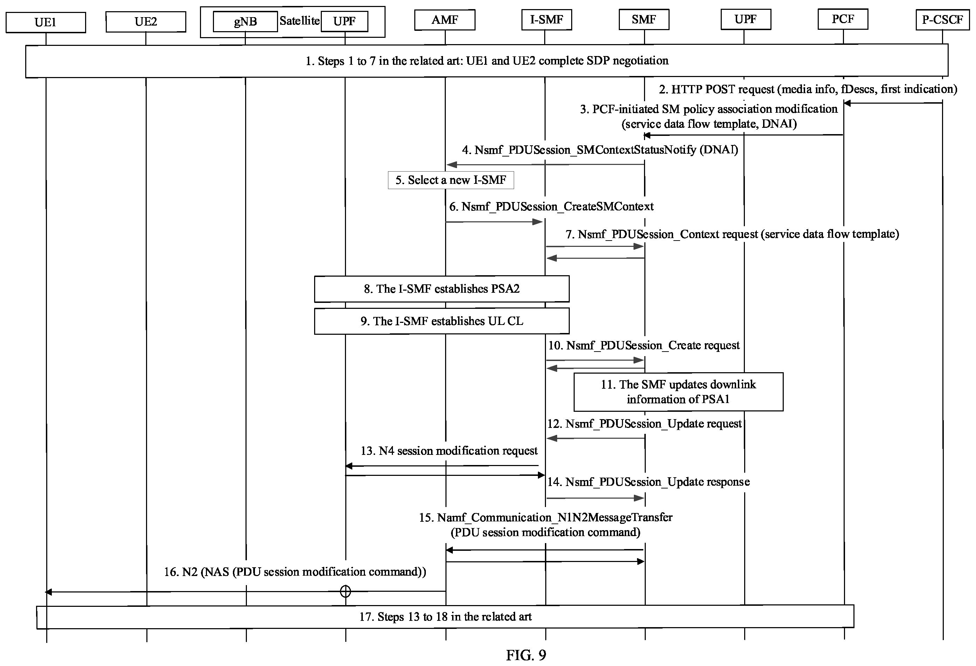

As shown in FIG. 9, the following steps are included.

2. A P-CSCF generates, based on an SDP offer and an SDP answer, media information corresponding to the voice.

Optionally, the P-CSCF sends a first indication to the PCF, where the first indication is the same as the first indication in step 8 of FIG. 6.

3. The PCF sends a specific DNAI to the SMF, where the DNAI is the same as the DNAI in step 10 of FIG. 6.

The PCF sends the specific DNAI to the SMF when UE1 and UE2 are under coverage of one serving satellite. The judgment method for the PCF includes:
Method 1: The PCF performs determining based on the source IP and target IP (or Source IP, source port, target IP, and target port) in the fDescs.

Sub-scheme 1: The PCF determines a CGI based on the IP or IP+port, and determines, based on the CGI, that UE1 and UE2 are under coverage of one serving satellite.

The PCF performs determining based on locally stored information, or the PCF obtains the CGI from the SMF.

Sub-scheme 2: Based on whether the IPs of UE1 and UE2 belong to the same range or realm, the PCF determines that UE1 and UE2 are under coverage of one serving satellite.

Method 2: The PCF performs determining based on a first indication sent by the P-CSCF.

4. The SMF determines to insert an I-SMF based on the specific DNAI, and the SMF sends an SM context status notification to the AMF, carrying the special DNAI information.

5. The AMF selects an I-SMF based on the special DNAI.

6. The AMF sends a create SM context request to the I-SMF, and the UE context includes a CGI or a satellite identifier.

7. The I-SMF requests a UE context from the SMF, and the context sent by the SMF to the I-SMF includes a service data flow template.

8. The I-SMF uses the UPF included in the satellite as a new PSA, and the I-SMF establishes a new PDU session Anchor 2 for the PDU session via N4.

The I-SMF determines the UPF included in the satellite based on the CGI or the satellite identifier.

The new PSA is abbreviated as PSA2, and the original UPF is abbreviated as PSA1.

9. The I-SMF uses the UPF included in the satellite as a UL CL, and the I-SMF establishes a new UL CL for the PDU session via N4.

10. The I-SMF sends a create request to the SMF.

11. The SMF updates downlink information of PSA1 to establish a connection between PSA1 and the UL CL.

12. The SMF sends an update request to the I-SMF to establish a voice QoS flow.

13. The I-SMF sends an update request to PSA2 to establish a voice QoS flow.

Optionally, the I-SMF sends local forwarding rules to PSA2, and the rule is generated based on the source IP and target IP (or Source IP, source port, target IP, and target port) in the service data flow template.

For example, a data packet with the source address being IP1 and the target address being IP2 is directly forwarded to UE2; or a data packet with the source address being IP1+port1 and the target address being IP2+port2 is directly forwarded to UE2.

14: The I-SMF sends a response message to the AMF.

15. The SMF sends a PDU session modification command to the AMF to establish a voice QoS flow.

16. The AMF sends a PDU session modification command to UE1 to establish a voice QoS flow.

17. Subsequent steps are completed.

In summary, the embodiments of the present application are beneficial to enable two UEs to perform USU calls, which helps shorten a communication path of the call and reduce the call latency.

For the communication method provided in the embodiments of the present application, the execution subject can be a communication apparatus. In the embodiments of the present application, the communication apparatus provided in the embodiments of the present application is described by using the communication method being executed by the communication apparatus as an example.

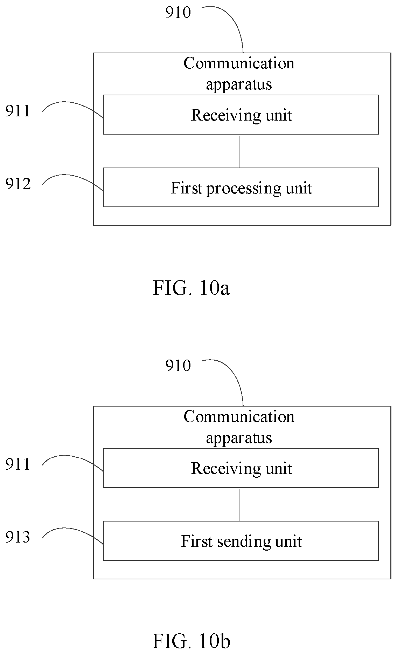

FIG. 10a and FIG. 10b show a structural diagram of a communication apparatus provided by an embodiment of the present application, and the communication apparatus may be applied to a first core network function. As shown in FIG. 10a, the communication apparatus 910 includes:
a receiving unit 911, configured to receive a first message from a second core network function, where the first message is used for establishing a voice bearer for a first terminal, and the first message includes information related to the first terminal and information related to a second terminal; and
a first processing unit 912, configured to determine that the first terminal and the second terminal access a network through a same satellite or different satellites.

Alternatively, as shown in FIG. 10b, the communication apparatus 910 includes:
a receiving unit 911, configured to receive a first message from a second core network function, where the first message is used for establishing a voice bearer for a first terminal, and the first message includes information related to the first terminal and information related to a second terminal; and
a first sending unit 913, configured to send a second message to a third core network function, where the second message is used to add a fourth core network function to a communication path, and the fourth core network function is a core network function configured to control a user plane function UPF included in a satellite.

Optionally, the first processing unit is specifically configured to:
in a case that it is determined that a satellite in which the first terminal is located includes a UPF, determine that the first terminal and the second terminal access the network through a same satellite or different satellites.

Optionally, the information related to the first terminal includes a first Internet protocol IP address, or the information related to the first terminal includes a first IP address and first port information.

The information related to the second terminal includes a second IP address, or the information related to the second terminal includes a second IP address and second port information.

The first processing unit is specifically configured to perform at least one of the following:
determining, based on the first IP address and the second IP address, that the first terminal and the second terminal access the network through a same satellite or different satellites; and
determining, based on the first IP address and the first port information, and the second IP address and the second port information, that the first terminal and the second terminal access the network through a same satellite or different satellites.

Optionally, the first processing unit is specifically configured to perform at least one of the following:
determining, based on an IP address range corresponding to the first IP address and an IP address range corresponding to the second IP address, that the first terminal and the second terminal access the network through a same satellite or different satellites;
determining, based on realm information corresponding to the first IP address and realm information corresponding to the second IP address, that the first terminal and the second terminal access the network through a same satellite or different satellites;
determining a first cell global identity CGI based on the first IP address, determining a second CGI based on the second IP address, and determining, based on the first CGI and the second CGI, that the first terminal and the second terminal access the network through a same satellite or different satellites;
determining an identifier of the first terminal based on the first IP address and determining a first CGI based on the identifier of the first terminal; determining an identifier of the second terminal based on the second IP address and determining a second CGI based on the identifier of the second terminal; and determining, based on the first CGI and the second CGI, that the first terminal and the second terminal access the network through a same satellite or different satellites;
determining a first satellite identifier based on the first IP address, determining a second satellite identifier based on the second IP address, and determining, based on the first satellite identifier and the second satellite identifier, that the first terminal and the second terminal access the network through a same satellite or different satellites; and
determining an identifier of the first terminal based on the first IP address and determining a first satellite identifier based on the identifier of the first terminal; determining an identifier of the second terminal based on the second IP address and determining a second satellite identifier based on the identifier of the second terminal; and determining, based on the first satellite identifier and the second satellite identifier, that the first terminal and the second terminal access the network through a same satellite or different satellites.

Optionally, the first processing unit is specifically configured to perform at least one of the following:
the determining, based on the first IP address and the first port information, and the second IP address and the second port information, that the first terminal and the second terminal access the network through a same satellite or different satellites includes at least one of the following:
determining a first CGI based on the first IP address and the first port information, determining a second CGI based on the second IP address and the second port information, and determining, based on the first CGI and the second CGI, that the first terminal and the second terminal access the network through a same satellite or different satellites;
determining an identifier of the first terminal based on the first IP address and the first port information, and determining a first CGI based on the identifier of the first terminal; determining an identifier of the second terminal based on the second IP address and the second port information, and determining a second CGI based on the identifier of the second terminal; and determining, based on the first CGI and the second CGI, that the first terminal and the second terminal access the network through a same satellite or different satellites;
determining a first satellite identifier based on the first IP address and the first port information, determining a second satellite identifier based on the second IP address and the second port information, and determining, based on the first satellite identifier and the second satellite identifier, that the first terminal and the second terminal access the network through a same satellite or different satellites; and
determining an identifier of the first terminal based on the first IP address and the first port information, and determining a first satellite identifier based on the identifier of the first terminal; determining an identifier of the second terminal based on the second IP address and the second port information, and determining a second satellite identifier based on the identifier of the second terminal; and determining, based on the first satellite identifier and the second satellite identifier, that the first terminal and the second terminal access the network through a same satellite or different satellites.

Optionally, the first processing unit is specifically configured to:
in a case that the IP address range corresponding to the first IP address is the same as the IP address range corresponding to the second IP address, determine that the first terminal and the second terminal access the network through a same satellite;
   or,
in a case that the realm information corresponding to the first IP address is the same as the realm information corresponding to the second IP address, determine that the first terminal and the second terminal access the network through a same satellite.

Optionally, the first processing unit is specifically configured to perform any one of the following:
in a case that the first CGI is the same as the second CGI, determining that the first terminal and the second terminal access the network through a same satellite;
in a case that a base station corresponding to the first CGI is the same as a base station corresponding to the second CGI, determining that the first terminal and the second terminal access the network through a same satellite; and
in a case that a satellite corresponding to the first CGI is the same as a satellite corresponding to the second CGI, determining that the first terminal and the second terminal access the network through a same satellite.

Optionally, the first processing unit is specifically configured to:
in a case that the first satellite identifier is the same as the second satellite identifier, determine that the first terminal and the second terminal access the network through a same satellite.

Optionally, the information related to the second terminal includes a second IP address, or the information related to the second terminal includes a second IP address and second port information.

The first processing unit is specifically configured to perform at least one of the following:
determining, based on a third IP address and the second IP address, that the first terminal and the second terminal access the network through a same satellite or different satellites;
determining, based on a third CGI and the second IP address, that the first terminal and the second terminal access the network through a same satellite or different satellites;
determining, based on a third satellite identifier and the second IP address, that the first terminal and the second terminal access the network through a same satellite or different satellites;
determining, based on a third IP address and third port information, and the second IP address and the second port information, that the first terminal and the second terminal access the network through a same satellite or different satellites;
determining, based on a third CGI, the second IP address, and the second port information, that the first terminal and the second terminal access the network through a same satellite or different satellites; and
determining, based on a third satellite identifier, the second IP address, and the second port information, that the first terminal and the second terminal access the network through a same satellite or different satellites.

The third IP address is an IP address of the first terminal stored by the first core network function;
the third port information is port information of the first terminal stored by the first core network function;
the third CGI is a CGI of the first terminal stored by the first core network function; and
the third satellite identifier is an identifier, stored by the first core network function, of a satellite in which the first terminal is located.

Optionally, the first processing unit is specifically configured to perform at least one of the following:
determining, based on an IP address range corresponding to the third IP address and an IP address range corresponding to the second IP address, that the first terminal and the second terminal access the network through a same satellite or different satellites;
determining, based on realm information corresponding to the third IP address and realm information corresponding to the second IP address, that the first terminal and the second terminal access the network through a same satellite or different satellites;
determining a third CGI based on the third IP address, determining a second CGI based on the second IP address, and determining, based on the third CGI and the second CGI, that the first terminal and the second terminal access the network through a same satellite or different satellites;
determining an identifier of the first terminal based on the third IP address, and determining a third CGI based on the identifier of the first terminal; determining an identifier of the second terminal based on the second IP address, and determining a second CGI based on the identifier of the second terminal; and determining, based on the third CGI and the second CGI, that the first terminal and the second terminal access the network through a same satellite or different satellites;
determining a third satellite identifier based on the third IP address, determining a second satellite identifier based on the second IP address, and determining, based on the third satellite identifier and the second satellite identifier, that the first terminal and the second terminal access the network through a same satellite or different satellites; and
determining an identifier of the first terminal based on the third IP address, and determining a third satellite identifier based on the identifier of the first terminal; determining an identifier of the second terminal based on the second IP address, and determining a second satellite identifier based on the identifier of the second terminal; and determining, based on the third satellite identifier and the second satellite identifier, that the first terminal and the second terminal access the network through a same satellite or different satellites.

Optionally, the first processing unit is specifically configured to perform at least one of the following:
determining a second CGI based on the second IP address, and determining, based on the third CGI and the second CGI, that the first terminal and the second terminal access the network through a same satellite or different satellites; and
determining an identifier of the second terminal based on the second IP address, determining a second CGI based on the identifier of the second terminal, and determining, based on the third CGI and the second CGI, that the first terminal and the second terminal access the network through a same satellite or different satellites.

Optionally, the first processing unit is specifically configured to perform at least one of the following:
determining a second CGI based on the second IP address and the second port information, and determining, based on the third CGI and the second CGI, that the first terminal and the second terminal access the network through a same satellite or different satellites; and
determining an identifier of the second terminal based on the second IP address and the second port information, determining a second CGI based on the identifier of the second terminal, and determining, based on the third CGI and the second CGI, that the first terminal and the second terminal access the network through a same satellite or different satellites.

Optionally, the first processing unit is specifically configured to perform at least one of the following:
determining a second satellite identifier based on the second IP address, and determining, based on the third satellite identifier and the second satellite identifier, that the first terminal and the second terminal access the network through a same satellite or different satellites; and
determining an identifier of the second terminal based on the second IP address, determining a second satellite identifier based on the identifier of the second terminal, and determining, based on the third satellite identifier and the second satellite identifier, that the first terminal and the second terminal access the network through a same satellite or different satellites.

Optionally, the first processing unit is specifically configured to perform at least one of the following:
determining a second satellite identifier based on the second IP address and the second port information, and determining, based on the third satellite identifier and the second satellite identifier, that the first terminal and the second terminal access the network through a same satellite or different satellites; and
determining an identifier of the second terminal based on the second IP address and the second port information, determining a second satellite identifier based on the identifier of the second terminal, and determining, based on the third satellite identifier and the second satellite identifier, that the first terminal and the second terminal access the network through a same satellite or different satellites.

Optionally, the first processing unit is specifically configured to perform at least one of the following:
determining a third CGI based on the third IP address and the third port information, determining a second CGI based on the second IP address and the second port information, and determining, based on the third CGI and the second CGI, that the first terminal and the second terminal access the network through a same satellite or different satellites;
determining an identifier of the first terminal based on the third IP address and the third port information, and determining a third CGI based on the identifier of the first terminal; determining an identifier of the second terminal based on the second IP address and the second port information, and determining a second CGI based on the identifier of the second terminal; and determining, based on the third CGI and the second CGI, that the first terminal and the second terminal access the network through a same satellite or different satellites;
determining a third satellite identifier based on the third IP address and the third port information, determining a second satellite identifier based on the second IP address and the second port information, and determining, based on the third satellite identifier and the second satellite identifier, that the first terminal and the second terminal access the network through a same satellite or different satellites; and
determining an identifier of the first terminal based on the third IP address and the third port information, and determining a third satellite identifier based on the identifier of the first terminal; determining an identifier of the second terminal based on the second IP address and the second port information, and determining a second satellite identifier based on the identifier of the second terminal; and determining, based on the third satellite identifier and the second satellite identifier, that the first terminal and the second terminal access the network through a same satellite or different satellites.

Optionally, the first processing unit is specifically configured to:
in a case that the IP address range corresponding to the third IP address is the same as the IP address range corresponding to the second IP address, determine that the first terminal and the second terminal access the network through a same satellite.

Optionally, the first processing unit is specifically configured to:
in a case that the realm information corresponding to the third IP address is the same as the realm information corresponding to the second IP address, determine that the first terminal and the second terminal access the network through a same satellite.

Optionally, the first processing unit is specifically configured to perform any one of the following:
in a case that the third CGI is the same as the second CGI, determine that the first terminal and the second terminal access the network through a same satellite;
in a case that a base station corresponding to the third CGI is the same as a base station corresponding to the second CGI, determine that the first terminal and the second terminal access the network through a same satellite; and
in a case that a satellite corresponding to the third CGI is the same as a satellite corresponding to the second CGI, determine that the first terminal and the second terminal access the network through a same satellite.

Optionally, the first processing unit is specifically configured to:
in a case that the third satellite identifier is the same as the second satellite identifier, determine that the first terminal and the second terminal access the network through a same satellite.

Optionally, in a case that the first message further includes first information or second information, the first processing unit is specifically configured to:
determine, based on the first information or the second information, that the first terminal and the second terminal access the network through a same satellite.

The first information includes information for indicating a terminal-satellite-terminal USU service; and
the second information is used to indicate that the first terminal and the second terminal access a network through a same satellite, or the second information is used to indicate performing a local switching for the first terminal and the second terminal, or the second information is used to indicate performing a local switching.

Optionally, the apparatus further includes at least one of the following:
a second processing unit, configured to add a UPF included in a target satellite as a PDU session anchor PSA to a PDU session, in a case that it is determined that the first terminal and the second terminal access the network through a same satellite;
a third processing unit, configured to add the UPF included in the target satellite as an uplink classifier UL CL to a PDU session, in a case that it is determined that the first terminal and the second terminal access the network through a same satellite;
a second sending unit, configured to: in a case that it is determined that the first terminal and the second terminal access the network through a same satellite, send a third message to the UPF included in the target satellite, where the third message is used for establishing a voice bearer for the first terminal;
a third sending unit, configured to: in a case that it is determined that the first terminal and the second terminal access the network through a same satellite, send third information to the UPF included in the target satellite, where the third information includes a local forwarding rule;
a fourth sending unit, configured to: in a case that it is determined that the first terminal and the second terminal access the network through a same satellite, send a fourth message to the third core network function, where the fourth message is used to add a fourth core network function to a communication path; and
a fifth sending unit, configured to: in a case that it is determined that the first terminal and the second terminal access the network through a same satellite, send a fifth message to the fourth core network function, where the fifth message is used for establishing a voice bearer for the first terminal.

The target satellite is a satellite where the first terminal and the second terminal are located.

Optionally, the fourth message includes first information, and the first information includes information for indicating a USU service.

Optionally, the first sending unit is specifically configured to:
in a case that the first message further includes information for indicating a USU service, send a second message to the third core network function.

The second message includes information for indicating a USU service.

Optionally, the information for indicating a USU service includes a data network access identifier DNAI corresponding to the USU service.

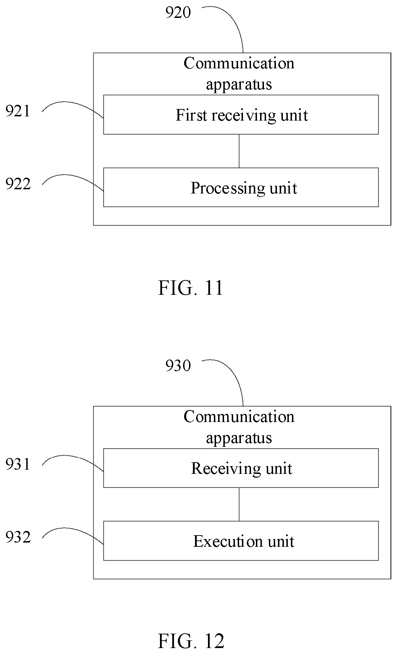

FIG. 11 shows a structural diagram of a communication apparatus provided by an embodiment of the present application, and the communication apparatus may be applied to a second core network function. As shown in FIG. 11, the communication apparatus 920 includes:
a first receiving unit 921, configured to receive a sixth message from a fifth core network function, where the sixth message includes information related to a first terminal and information related to a second terminal; and
a processing unit 922, configured to determine that the first terminal and the second terminal access a network through a same satellite or different satellites.

Optionally, the apparatus further includes:
a sending unit, configured to send a first message to a first core network function, in a case that it is determined that the first terminal and the second terminal access the network through a same satellite.

The first message is used for establishing a voice bearer for the first terminal, the first message includes information related to the first terminal and information related to the second terminal, the first message further includes first information, and the first information includes information for indicating a terminal-satellite-terminal USU service.

Optionally, the processing unit is specifically configured to:
in a case that the sixth message further includes second information, determine that the first terminal and the second terminal access the network through a same satellite.

The second information is used to indicate that the first terminal and the second terminal access a network through a same satellite, or to indicate performing a local switching for the first terminal and the second terminal, or to indicate performing a local switching.

Optionally, the information related to the first terminal includes a first Internet protocol IP address, or the information related to the first terminal includes a first IP address and first port information;
the information related to the second terminal includes a second IP address, or the information related to the second terminal includes a second IP address and second port information; and
the processing unit is specifically configured to perform at least one of the following:
   determining, based on the first IP address and the second IP address, that the first terminal and the second terminal access the network through a same satellite or different satellites; and
   determining, based on the first IP address and the first port information, and the second IP address and the second port information, that the first terminal and the second terminal access the network through a same satellite or different satellites.

Optionally, the processing unit is specifically configured to perform at least one of the following:
determining, based on an IP address range corresponding to the first IP address and an IP address range corresponding to the second IP address, that the first terminal and the second terminal access the network through a same satellite or different satellites;
determining, based on realm information corresponding to the first IP address and realm information corresponding to the second IP address, that the first terminal and the second terminal access the network through a same satellite or different satellites;
determining a first cell global identity CGI based on the first IP address, determining a second CGI based on the second IP address, and determining, based on the first CGI and the second CGI, that the first terminal and the second terminal access the network through a same satellite or different satellites;
determining an identifier of the first terminal based on the first IP address and determining a first CGI based on the identifier of the first terminal; determining an identifier of the second terminal based on the second IP address and determining a second CGI based on the identifier of the second terminal; and determining, based on the first CGI and the second CGI, that the first terminal and the second terminal access the network through a same satellite or different satellites;
determining a first satellite identifier based on the first IP address, determining a second satellite identifier based on the second IP address, and determining, based on the first satellite identifier and the second satellite identifier, that the first terminal and the second terminal access the network through a same satellite or different satellites; and
determining an identifier of the first terminal based on the first IP address and determining a first satellite identifier based on the identifier of the first terminal; determining an identifier of the second terminal based on the second IP address and determining a second satellite identifier based on the identifier of the second terminal; and determining, based on the first satellite identifier and the second satellite identifier, that the first terminal and the second terminal access the network through a same satellite or different satellites.

Optionally, the processing unit is specifically configured to perform at least one of the following:
determining a first CGI based on the first IP address and the first port information, determining a second CGI based on the second IP address and the second port information, and determining, based on the first CGI and the second CGI, that the first terminal and the second terminal access the network through a same satellite or different satellites;
determining an identifier of the first terminal based on the first IP address and the first port information, and determining a first CGI based on the identifier of the first terminal; determining an identifier of the second terminal based on the second IP address and the second port information, and determining a second CGI based on the identifier of the second terminal; and determining, based on the first CGI and the second CGI, that the first terminal and the second terminal access the network through a same satellite or different satellites;
determining a first satellite identifier based on the first IP address and the first port information, determining a second satellite identifier based on the second IP address and the second port information, and determining, based on the first satellite identifier and the second satellite identifier, that the first terminal and the second terminal access the network through a same satellite or different satellites; and
determining an identifier of the first terminal based on the first IP address and the first port information, and determining a first satellite identifier based on the identifier of the first terminal; determining an identifier of the second terminal based on the second IP address and the second port information, and determining a second satellite identifier based on the identifier of the second terminal; and determining, based on the first satellite identifier and the second satellite identifier, that the first terminal and the second terminal access the network through a same satellite or different satellites.

Optionally, the processing unit is specifically configured to:
in a case that the IP address range corresponding to the first IP address is the same as the IP address range corresponding to the second IP address, determine that the first terminal and the second terminal access the network through a same satellite;
   or,
in a case that the realm information corresponding to the first IP address is the same as the realm information corresponding to the second IP address, determine that the first terminal and the second terminal access the network through a same satellite.

Optionally, the processing unit is specifically configured to perform any one of the following:
in a case that the first CGI is the same as the second CGI, determine that the first terminal and the second terminal access the network through a same satellite;
in a case that a base station corresponding to the first CGI is the same as a base station corresponding to the second CGI, determine that the first terminal and the second terminal access the network through a same satellite; and
in a case that a satellite corresponding to the first CGI is the same as a satellite corresponding to the second CGI, determine that the first terminal and the second terminal access the network through a same satellite.

Optionally, the processing unit is specifically configured to:
in a case that the first satellite identifier is the same as the second satellite identifier, determine that the first terminal and the second terminal access the network through a same satellite.

Optionally, the information related to the second terminal includes a second IP address, or the information related to the second terminal includes a second IP address and second port information.

The processing unit is specifically configured to perform at least one of the following:
determining, based on a third IP address and the second IP address, that the first terminal and the second terminal access the network through a same satellite or different satellites;
determining, based on a third CGI and the second IP address, that the first terminal and the second terminal access the network through a same satellite or different satellites;
determining, based on a third satellite identifier and the second IP address, that the first terminal and the second terminal access the network through a same satellite or different satellites;
determining, based on a third IP address and third port information, and the second IP address and the second port information, that the first terminal and the second terminal access the network through a same satellite or different satellites;
determining, based on a third CGI, the second IP address, and the second port information, that the first terminal and the second terminal access the network through a same satellite or different satellites; and
determining, based on a third satellite identifier, the second IP address, and the second port information, that the first terminal and the second terminal access the network through a same satellite or different satellites.

The third IP address is an IP address of the first terminal stored by the second core network function;
the third port information is port information of the first terminal stored by the second core network function;
the third CGI is a CGI of the first terminal stored by the second core network function; and
the third satellite identifier is an identifier, stored by the second core network function, of a satellite in which the first terminal is located.

Optionally, the processing unit is specifically configured to perform at least one of the following:
determining, based on an IP address range corresponding to the third IP address and an IP address range corresponding to the second IP address, that the first terminal and the second terminal access the network through a same satellite or different satellites;
determining, based on realm information corresponding to the third IP address and realm information corresponding to the second IP address, that the first terminal and the second terminal access the network through a same satellite or different satellites;
determining a third CGI based on the third IP address, determining a second CGI based on the second IP address, and determining, based on the third CGI and the second CGI, that the first terminal and the second terminal access the network through a same satellite or different satellites;
determining an identifier of the first terminal based on the third IP address, and determining a third CGI based on the identifier of the first terminal; determining an identifier of the second terminal based on the second IP address, and determining a second CGI based on the identifier of the second terminal; and determining, based on the third CGI and the second CGI, that the first terminal and the second terminal access the network through a same satellite or different satellites;
determining a third satellite identifier based on the third IP address, determining a second satellite identifier based on the second IP address, and determining, based on the third satellite identifier and the second satellite identifier, that the first terminal and the second terminal access the network through a same satellite or different satellites; and
determining an identifier of the first terminal based on the third IP address, and determining a third satellite identifier based on the identifier of the first terminal; determining an identifier of the second terminal based on the second IP address, and determining a second satellite identifier based on the identifier of the second terminal; and determining, based on the third satellite identifier and the second satellite identifier, that the first terminal and the second terminal access the network through a same satellite or different satellites.

Optionally, the processing unit is specifically configured to perform at least one of the following:
determining a second CGI based on the second IP address, and determining, based on the third CGI and the second CGI, that the first terminal and the second terminal access the network through a same satellite or different satellites; and
determining an identifier of the second terminal based on the second IP address, determining a second CGI based on the identifier of the second terminal, and determining, based on the third CGI and the second CGI, that the first terminal and the second terminal access the network through a same satellite or different satellites.

Optionally, the processing unit is specifically configured to perform at least one of the following:
determining a second CGI based on the second IP address and the second port information, and determining, based on the third CGI and the second CGI, that the first terminal and the second terminal access the network through a same satellite or different satellites; and
determining an identifier of the second terminal based on the second IP address and the second port information, determining a second CGI based on the identifier of the second terminal, and determining, based on the third CGI and the second CGI, that the first terminal and the second terminal access the network through a same satellite or different satellites.

Optionally, the processing unit is specifically configured to perform at least one of the following:
determining a second satellite identifier based on the second IP address, and determining, based on the third satellite identifier and the second satellite identifier, that the first terminal and the second terminal access the network through a same satellite or different satellites; and
determining an identifier of the second terminal based on the second IP address, determining a second satellite identifier based on the identifier of the second terminal, and determining, based on the third satellite identifier and the second satellite identifier, that the first terminal and the second terminal access the network through a same satellite or different satellites.

Optionally, the processing unit is specifically configured to perform at least one of the following:
determining a second satellite identifier based on the second IP address and the second port information, and determining, based on the third satellite identifier and the second satellite identifier, that the first terminal and the second terminal access the network through a same satellite or different satellites; and
determining an identifier of the second terminal based on the second IP address and the second port information, determining a second satellite identifier based on the identifier of the second terminal, and determining, based on the third satellite identifier and the second satellite identifier, that the first terminal and the second terminal access the network through a same satellite or different satellites.

Optionally, the processing unit is specifically configured to perform at least one of the following:
determining a third CGI based on the third IP address and the third port information, determining a second CGI based on the second IP address and the second port information, and determining, based on the third CGI and the second CGI, that the first terminal and the second terminal access the network through a same satellite or different satellites;
determining an identifier of the first terminal based on the third IP address and the third port information, and determining a third CGI based on the identifier of the first terminal; determining an identifier of the second terminal based on the second IP address and the second port information, and determining a second CGI based on the identifier of the second terminal; and determining, based on the third CGI and the second CGI, that the first terminal and the second terminal access the network through a same satellite or different satellites;
determining a third satellite identifier based on the third IP address and the third port information, determining a second satellite identifier based on the second IP address and the second port information, and determining, based on the third satellite identifier and the second satellite identifier, that the first terminal and the second terminal access the network through a same satellite or different satellites; and
determining an identifier of the first terminal based on the third IP address and the third port information, and determining a third satellite identifier based on the identifier of the first terminal; determining an identifier of the second terminal based on the second IP address and the second port information, and determining a second satellite identifier based on the identifier of the second terminal; and determining, based on the third satellite identifier and the second satellite identifier, that the first terminal and the second terminal access the network through a same satellite or different satellites.

Optionally, the processing unit is specifically configured to:
in a case that the IP address range corresponding to the third IP address is the same as the IP address range corresponding to the second IP address, determine that the first terminal and the second terminal access the network through a same satellite.

Optionally, the processing unit is specifically configured to:
in a case that the realm information corresponding to the third IP address is the same as the realm information corresponding to the second IP address, determine that the first terminal and the second terminal access the network through a same satellite.

Optionally, the processing unit is specifically configured to perform any one of the following:
in a case that the third CGI is the same as the second CGI, determine that the first terminal and the second terminal access the network through a same satellite;
in a case that a base station corresponding to the third CGI is the same as a base station corresponding to the second CGI, determine that the first terminal and the second terminal access the network through a same satellite; and
in a case that a satellite corresponding to the third CGI is the same as a satellite corresponding to the second CGI, determine that the first terminal and the second terminal access the network through a same satellite.

Optionally, the processing unit is specifically configured to:
in a case that the third satellite identifier is the same as the second satellite identifier, determine that the first terminal and the second terminal access the network through a same satellite.

FIG. 12 shows a structural diagram of a communication apparatus provided by an embodiment of the present application, and the communication apparatus may be applied to a fourth core network function. As shown in FIG. 12, the communication apparatus 930 includes:
a receiving unit 931, configured to receive a sixth message from a third core network function, where the sixth message includes first information, and the first information includes information for indicating a terminal-satellite-terminal USU service; and
an execution unit 932, configured to perform a third operation based on the first information.

The third operation includes at least one of the following:
adding a UPF of a target satellite as a PDU session anchor PSA to a PDU session;
adding the UPF of the target satellite as an uplink classifier UL CL to a PDU session;
sending a seventh message to the UPF of the target satellite, where the seventh message is used to indicate establishing a voice bearer for a first terminal; and
sending third information to the UPF of the target satellite, where the third information includes a local forwarding rule.

The target satellite is a satellite where the first terminal and a second terminal are located.

The communication apparatus in this embodiment of the present application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal listed above, and other devices may be a server, a network attached storage (Network Attached Storage, NAS), and the like. This is not specifically limited in the embodiments of the present application.

The communication apparatus provided in this embodiment of the present application can implement the processes implemented in the method embodiment in FIG. 3 to FIG. 8, with the same technical effects achieved. To avoid repetition, details are not described herein again.

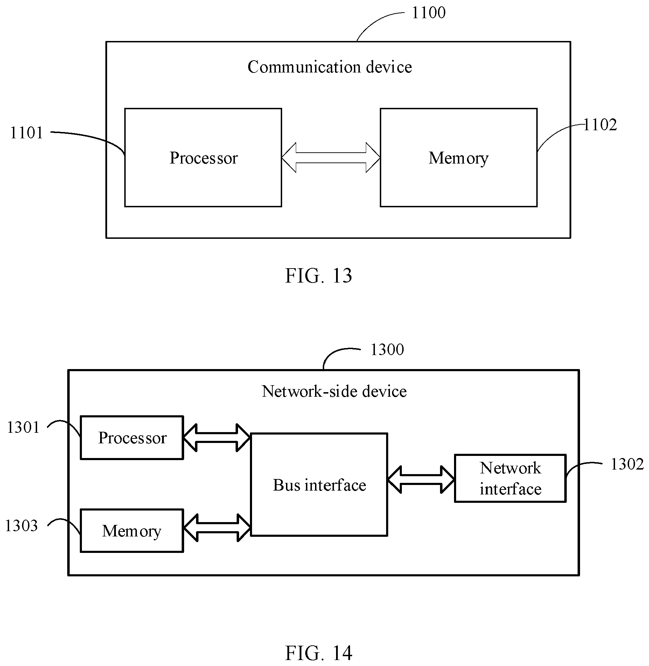

As shown in FIG. 13, an embodiment of the present application further provides a communication device 1100, including a processor 1101 and a memory 1102. A program or instructions capable of running on the processor 1101 are stored in the memory 1102. For example, when the communication device 1100 is a first core network function and when the program or the instructions are executed by the processor 1101, the steps of the foregoing embodiments of the method on the first core network function side are implemented, with the same technical effects achieved. When the communication device 1100 is a second core network function and when the program or instructions are executed by the processor 1101, the steps of the foregoing embodiments of the method on the second core network function side are implemented, with the same technical effects achieved. When the communication device 1100 is a fourth core network function and when the program or instructions are executed by the processor 1101, the steps of the foregoing embodiments of the method on the fourth core network function side are implemented, with the same technical effects achieved. To avoid repetition, details are not described herein again.

An embodiment of the present application further provides a network-side device, which includes a processor and a communication interface, where the communication interface is coupled to the processor, and the communication interface is configured to receive a first message from a second core network function, where the first message is used for establishing a voice bearer for a first terminal, and the first message includes information related to the first terminal and information related to a second terminal; and send a second message to a third core network function, where the second message is used to add a fourth core network function to a communication path, and the fourth core network function is a core network function configured to control a user plane function UPF included in a satellite;
or,
the communication interface is configured to receive a first message from a second core network function, where the first message is used for establishing a voice bearer for a first terminal, and the first message includes information related to the first terminal and information related to a second terminal; and the processor is configured to determine that the first terminal and the second terminal access a network through a same satellite or different satellites.

The network-side device embodiment corresponds to the foregoing method embodiment on the first core network function side, and the implementation processes and implementations of the foregoing method embodiments can be applied to the network-side device embodiment, with the same technical effects achieved.

An embodiment of the present application further provides a network-side device, which includes a processor and a communication interface, where the communication interface is coupled to the processor, and the communication interface is configured to receive a sixth message from a fifth core network function, where the sixth message includes information related to a first terminal and information related to a second terminal; and the processor is configured to determine that the first terminal and the second terminal access a network through a same satellite or different satellites.

The network-side device embodiment corresponds to the foregoing method embodiment on the second core network function side, and the implementation processes and implementations of the foregoing method embodiments can be applied to the network-side device embodiment, with the same technical effects achieved.

An embodiment of the present application further provides a network-side device, which includes a processor and a communication interface, where the communication interface is coupled to the processor, and the communication interface is configured to receive a sixth message from a third core network function, where the sixth message includes first information, and the first information includes information for indicating a terminal-satellite-terminal USU service; and the communication interface or the processor is configured to perform at least one of the following: adding a UPF of a target satellite as a protocol data unit session anchor PSA to a protocol data unit PDU session; adding the UPF of the target satellite as an uplink classifier UL CL to a PDU session; sending a seventh message to the UPF of the target satellite, where the seventh message is used to indicate establishing a voice bearer for a first terminal; and sending third information to the UPF of the target satellite, where the third information includes a local forwarding rule; where the target satellite is a satellite where the first terminal and a second terminal are located.

The network-side device embodiment corresponds to the foregoing method embodiment on the fourth core network function side, and the implementation processes and implementations of the foregoing method embodiments can be applied to the network-side device embodiment, with the same technical effects achieved.

Specifically, an embodiment of the present application further provides a network-side device. As shown in FIG. 14, the network-side device 1300 includes a processor 1301, a network interface 1302, and a memory 1303. The network interface 1302 is, for example, a common public radio interface (common public radio interface, CPRI).

Specifically, the network-side device 1300 according to this embodiment of the present invention further includes instructions or programs stored in the memory 1303 and capable of running on the processor 1301, and the processor 1301 calls the instructions or programs in the memory 1303 to execute the methods performed by the modules shown in FIG. 10a, FIG. 10b, FIG. 11, and FIG. 12, with the same technical effects achieved. To avoid repetition, details are not described herein again.

An embodiment of the present application further provides a readable storage medium, where the readable storage medium stores a program or instructions, and when the program or the instructions are executed by a processor, the processes of the foregoing embodiments of the communication method are implemented, with the same technical effects achieved. To avoid repetition, details are not described herein again.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc. In some examples, the readable storage medium may be a non-transitory readable storage medium.

An embodiment of the present application further provides a chip, including a processor and a communication interface. The communication interface is coupled to the processor. The processor is configured to run a program or instructions to implement the processes of the foregoing embodiments of the communication method, with the same technical effect achieved. To avoid repetition, details are not described herein again.

It should be understood that the chip mentioned in this embodiment of the present application may also be referred to as a system-on-chip, a system chip, a system-on-a-chip, or a system on a chip, or the like.

An embodiment of the present application further provides a computer program/program product, where the computer program/program product is stored in a storage medium, and when being executed by at least one processor, the computer program/program product is configured to implement the processes of the foregoing embodiments of the communication method, with the same technical effects achieved. To avoid repetition, details are not repeated herein.

An embodiment of the present application further provides a communication system, including a terminal and a network-side device, where the terminal can be configured to execute the steps of the communication method on the terminal side, and the network-side device can be configured to execute the steps of the communication method on the first core network function side.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a ..." does not preclude the presence of other identical elements in the process, method, article, or apparatus that includes the element. In addition, it should be noted that the scope of the method and apparatus in the implementations of the present application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples can be combined in other examples.

According to the foregoing description of the implementations, persons skilled in the art may clearly understand that the method in the foregoing embodiments may be implemented by a computer software product with a necessary general hardware platform. Certainly, the method in the foregoing embodiment may alternatively be implemented by hardware. The computer software product is stored in a storage medium (such as a ROM, a RAM, a magnetic disk, or an optical disc), and includes several instructions to enable a terminal or a network-side device to execute the methods described in the embodiments of the present application.

The foregoing describes the embodiments of the present application with reference to the accompanying drawings. However, the present application is not limited to the foregoing specific embodiments. The foregoing specific embodiments are merely illustrative rather than restrictive. As instructed by the present application, persons of ordinary skill in the art may develop many other implementation manners without departing from principles of the present application and the protection scope of the claims, many and all such implementation manners fall within the protection scope of the present application.

## Claims

1. A communication method, comprising:
receiving, by a first core network function, a first message from a second core network function, wherein the first message is used for establishing a voice bearer for a first terminal, and the first message comprises information related to the first terminal and information related to a second terminal; and
performing, by the first core network function, a first operation or a second operation based on the first message; wherein
the first operation comprises: determining that the first terminal and the second terminal access a network through a same satellite or different satellites; and
the second operation comprises: sending a second message to a third core network function, wherein the second message is used to add a fourth core network function to a communication path, and the fourth core network function is a core network function configured to control a user plane function UPF comprised in a satellite.

2. The method according to claim 1, wherein the determining that the first terminal and the second terminal access a network through a same satellite or different satellites comprises:
in a case that it is determined that a satellite in which the first terminal is located comprises a UPF, determining, by the first core network function, that the first terminal and the second terminal access the network through a same satellite or different satellites.

3. The method according to claim 1 or 2, wherein
the information related to the first terminal comprises a first Internet protocol IP address, or the information related to the first terminal comprises a first IP address and first port information;
the information related to the second terminal comprises a second IP address, or the information related to the second terminal comprises a second IP address and second port information; and
the determining that the first terminal and the second terminal access a network through a same satellite or different satellites comprises at least one of the following:
determining, based on the first IP address and the second IP address, that the first terminal and the second terminal access the network through a same satellite or different satellites; and
determining, based on the first IP address and the first port information, and the second IP address and the second port information, that the first terminal and the second terminal access the network through a same satellite or different satellites.

4. The method according to claim 3, wherein
the determining, based on the first IP address and the second IP address, that the first terminal and the second terminal access the network through a same satellite or different satellites comprises at least one of the following:
determining, based on an IP address range corresponding to the first IP address and an IP address range corresponding to the second IP address, that the first terminal and the second terminal access the network through a same satellite or different satellites;
determining, based on realm information corresponding to the first IP address and realm information corresponding to the second IP address, that the first terminal and the second terminal access the network through a same satellite or different satellites;
determining a first cell global identity CGI based on the first IP address, determining a second CGI based on the second IP address, and determining, based on the first CGI and the second CGI, that the first terminal and the second terminal access the network through a same satellite or different satellites;
determining an identifier of the first terminal based on the first IP address and determining a first CGI based on the identifier of the first terminal; determining an identifier of the second terminal based on the second IP address and determining a second CGI based on the identifier of the second terminal; and determining, based on the first CGI and the second CGI, that the first terminal and the second terminal access the network through a same satellite or different satellites;
determining a first satellite identifier based on the first IP address, determining a second satellite identifier based on the second IP address, and determining, based on the first satellite identifier and the second satellite identifier, that the first terminal and the second terminal access the network through a same satellite or different satellites; and
determining an identifier of the first terminal based on the first IP address and determining a first satellite identifier based on the identifier of the first terminal; determining an identifier of the second terminal based on the second IP address and determining a second satellite identifier based on the identifier of the second terminal; and determining, based on the first satellite identifier and the second satellite identifier, that the first terminal and the second terminal access the network through a same satellite or different satellites.

5. The method according to claim 3, wherein
the determining, based on the first IP address and the first port information, and the second IP address and the second port information, that the first terminal and the second terminal access the network through a same satellite or different satellites comprises at least one of the following:
determining a first CGI based on the first IP address and the first port information, determining a second CGI based on the second IP address and the second port information, and determining, based on the first CGI and the second CGI, that the first terminal and the second terminal access the network through a same satellite or different satellites;
determining an identifier of the first terminal based on the first IP address and the first port information, and determining a first CGI based on the identifier of the first terminal; determining an identifier of the second terminal based on the second IP address and the second port information, and determining a second CGI based on the identifier of the second terminal; and determining, based on the first CGI and the second CGI, that the first terminal and the second terminal access the network through a same satellite or different satellites;
determining a first satellite identifier based on the first IP address and the first port information, determining a second satellite identifier based on the second IP address and the second port information, and determining, based on the first satellite identifier and the second satellite identifier, that the first terminal and the second terminal access the network through a same satellite or different satellites; and
determining an identifier of the first terminal based on the first IP address and the first port information, and determining a first satellite identifier based on the identifier of the first terminal; determining an identifier of the second terminal based on the second IP address and the second port information, and determining a second satellite identifier based on the identifier of the second terminal; and determining, based on the first satellite identifier and the second satellite identifier, that the first terminal and the second terminal access the network through a same satellite or different satellites.

6. The method according to claim 3 or 4, wherein
the determining, based on an IP address range corresponding to the first IP address and an IP address range corresponding to the second IP address, that the first terminal and the second terminal access the network through a same satellite or different satellites comprises:
in a case that the IP address range corresponding to the first IP address is the same as the IP address range corresponding to the second IP address, determining that the first terminal and the second terminal access the network through a same satellite;
or,
the determining, based on realm information corresponding to the first IP address and realm information corresponding to the second IP address, that the first terminal and the second terminal access the network through a same satellite or different satellites comprises:
in a case that the realm information corresponding to the first IP address is the same as the realm information corresponding to the second IP address, determining that the first terminal and the second terminal access the network through a same satellite;
or,
the determining, based on the first CGI and the second CGI, that the first terminal and the second terminal access the network through a same satellite or different satellites comprises any one of the following:
in a case that the first CGI is the same as the second CGI, determining that the first terminal and the second terminal access the network through a same satellite;
in a case that a base station corresponding to the first CGI is the same as a base station corresponding to the second CGI, determining that the first terminal and the second terminal access the network through a same satellite; and
in a case that a satellite corresponding to the first CGI is the same as a satellite corresponding to the second CGI, determining that the first terminal and the second terminal access the network through a same satellite;
or,
the determining, based on the first satellite identifier and the second satellite identifier, that the first terminal and the second terminal access the network through a same satellite or different satellites comprises:
in a case that the first satellite identifier is the same as the second satellite identifier, determining that the first terminal and the second terminal access the network through a same satellite.

7. The method according to claim 1 or 2, wherein
the information related to the second terminal comprises a second IP address, or the information related to the second terminal comprises a second IP address and second port information; and
the determining that the first terminal and the second terminal access a network through a same satellite or different satellites comprises at least one of the following:
determining, based on a third IP address and the second IP address, that the first terminal and the second terminal access the network through a same satellite or different satellites;
determining, based on a third CGI and the second IP address, that the first terminal and the second terminal access the network through a same satellite or different satellites;
determining, based on a third satellite identifier and the second IP address, that the first terminal and the second terminal access the network through a same satellite or different satellites;
determining, based on a third IP address and third port information, and the second IP address and the second port information, that the first terminal and the second terminal access the network through a same satellite or different satellites;
determining, based on a third CGI, the second IP address, and the second port information, that the first terminal and the second terminal access the network through a same satellite or different satellites; and
determining, based on a third satellite identifier, the second IP address, and the second port information, that the first terminal and the second terminal access the network through a same satellite or different satellites; wherein
the third IP address is an IP address of the first terminal stored by the first core network function;
the third port information is port information of the first terminal stored by the first core network function;
the third CGI is a CGI of the first terminal stored by the first core network function; and
the third satellite identifier is an identifier, stored by the first core network function, of a satellite in which the first terminal is located.

8. The method according to claim 7, wherein
the determining, based on a third IP address and the second IP address, that the first terminal and the second terminal access the network through a same satellite or different satellites comprises at least one of the following:
determining, based on an IP address range corresponding to the third IP address and an IP address range corresponding to the second IP address, that the first terminal and the second terminal access the network through a same satellite or different satellites;
determining, based on realm information corresponding to the third IP address and realm information corresponding to the second IP address, that the first terminal and the second terminal access the network through a same satellite or different satellites;
determining a third CGI based on the third IP address, determining a second CGI based on the second IP address, and determining, based on the third CGI and the second CGI, that the first terminal and the second terminal access the network through a same satellite or different satellites;
determining an identifier of the first terminal based on the third IP address, and determining a third CGI based on the identifier of the first terminal; determining an identifier of the second terminal based on the second IP address, and determining a second CGI based on the identifier of the second terminal; and determining, based on the third CGI and the second CGI, that the first terminal and the second terminal access the network through a same satellite or different satellites;
determining a third satellite identifier based on the third IP address, determining a second satellite identifier based on the second IP address, and determining, based on the third satellite identifier and the second satellite identifier, that the first terminal and the second terminal access the network through a same satellite or different satellites; and
determining an identifier of the first terminal based on the third IP address, and determining a third satellite identifier based on the identifier of the first terminal; determining an identifier of the second terminal based on the second IP address, and determining a second satellite identifier based on the identifier of the second terminal; and determining, based on the third satellite identifier and the second satellite identifier, that the first terminal and the second terminal access the network through a same satellite or different satellites.

9. The method according to claim 7, wherein
the determining, based on a third CGI and the second IP address, that the first terminal and the second terminal access the network through a same satellite or different satellites comprises at least one of the following:
determining a second CGI based on the second IP address, and determining, based on the third CGI and the second CGI, that the first terminal and the second terminal access the network through a same satellite or different satellites; and
determining an identifier of the second terminal based on the second IP address, determining a second CGI based on the identifier of the second terminal, and determining, based on the third CGI and the second CGI, that the first terminal and the second terminal access the network through a same satellite or different satellites;
or,
the determining, based on a third CGI, the second IP address, and the second port information, that the first terminal and the second terminal access the network through a same satellite or different satellites comprises at least one of the following:
determining a second CGI based on the second IP address and the second port information, and determining, based on the third CGI and the second CGI, that the first terminal and the second terminal access the network through a same satellite or different satellites; and
determining an identifier of the second terminal based on the second IP address and the second port information, determining a second CGI based on the identifier of the second terminal, and determining, based on the third CGI and the second CGI, that the first terminal and the second terminal access the network through a same satellite or different satellites.

10. The method according to claim 7, wherein
the determining, based on a third satellite identifier and the second IP address, that the first terminal and the second terminal access the network through a same satellite or different satellites comprises at least one of the following:
determining a second satellite identifier based on the second IP address, and determining, based on the third satellite identifier and the second satellite identifier, that the first terminal and the second terminal access the network through a same satellite or different satellites; and
determining an identifier of the second terminal based on the second IP address, determining a second satellite identifier based on the identifier of the second terminal, and determining, based on the third satellite identifier and the second satellite identifier, that the first terminal and the second terminal access the network through a same satellite or different satellites;
or,
the determining, based on a third satellite identifier, the second IP address, and the second port information, that the first terminal and the second terminal access the network through a same satellite or different satellites comprises at least one of the following:
determining a second satellite identifier based on the second IP address and the second port information, and determining, based on the third satellite identifier and the second satellite identifier, that the first terminal and the second terminal access the network through a same satellite or different satellites; and
determining an identifier of the second terminal based on the second IP address and the second port information, determining a second satellite identifier based on the identifier of the second terminal, and determining, based on the third satellite identifier and the second satellite identifier, that the first terminal and the second terminal access the network through a same satellite or different satellites.

11. The method according to claim 7, wherein
the determining, based on a third IP address and third port information, and the second IP address and the second port information, that the first terminal and the second terminal access the network through a same satellite or different satellites comprises at least one of the following:
determining a third CGI based on the third IP address and the third port information, determining a second CGI based on the second IP address and the second port information, and determining, based on the third CGI and the second CGI, that the first terminal and the second terminal access the network through a same satellite or different satellites;
determining an identifier of the first terminal based on the third IP address and the third port information, and determining a third CGI based on the identifier of the first terminal; determining an identifier of the second terminal based on the second IP address and the second port information, and determining a second CGI based on the identifier of the second terminal; and determining, based on the third CGI and the second CGI, that the first terminal and the second terminal access the network through a same satellite or different satellites;
determining a third satellite identifier based on the third IP address and the third port information, determining a second satellite identifier based on the second IP address and the second port information, and determining, based on the third satellite identifier and the second satellite identifier, that the first terminal and the second terminal access the network through a same satellite or different satellites; and
determining an identifier of the first terminal based on the third IP address and the third port information, and determining a third satellite identifier based on the identifier of the first terminal; determining an identifier of the second terminal based on the second IP address and the second port information, and determining a second satellite identifier based on the identifier of the second terminal; and determining, based on the third satellite identifier and the second satellite identifier, that the first terminal and the second terminal access the network through a same satellite or different satellites.

12. The method according to any one of claims 8 to 11, wherein
the determining, based on an IP address range corresponding to the third IP address and an IP address range corresponding to the second IP address, that the first terminal and the second terminal access the network through a same satellite or different satellites comprises:
in a case that the IP address range corresponding to the third IP address is the same as the IP address range corresponding to the second IP address, determining that the first terminal and the second terminal access the network through a same satellite;
or,
the determining, based on realm information corresponding to the third IP address and realm information corresponding to the second IP address, that the first terminal and the second terminal access the network through a same satellite or different satellites comprises:
in a case that the realm information corresponding to the third IP address is the same as the realm information corresponding to the second IP address, determining that the first terminal and the second terminal access the network through a same satellite;
or,
the determining, based on the third CGI and the second CGI, that the first terminal and the second terminal access the network through a same satellite or different satellites comprises any one of the following:
in a case that the third CGI is the same as the second CGI, determining that the first terminal and the second terminal access the network through a same satellite;
in a case that a base station corresponding to the third CGI is the same as a base station corresponding to the second CGI, determining that the first terminal and the second terminal access the network through a same satellite; and
in a case that a satellite corresponding to the third CGI is the same as a satellite corresponding to the second CGI, determining that the first terminal and the second terminal access the network through a same satellite;
or,
the determining, based on the third satellite identifier and the second satellite identifier, that the first terminal and the second terminal access the network through a same satellite or different satellites comprises:
in a case that the third satellite identifier is the same as the second satellite identifier, determining that the first terminal and the second terminal access the network through a same satellite.

13. The method according to claim 1 or 2, wherein in a case that the first message further comprises first information or second information, the determining that the first terminal and the second terminal access the network through a same satellite or different satellites comprises:
determining, based on the first information or the second information, that the first terminal and the second terminal access the network through a same satellite; wherein
the first information comprises information for indicating a terminal-satellite-terminal USU service; and
the second information is used to indicate that the first terminal and the second terminal access a network through a same satellite, or the second information is used to indicate performing a local switching for the first terminal and the second terminal, or the second information is used to indicate performing a local switching.

14. The method according to any one of claims 1 to 13, wherein in a case that it is determined that the first terminal and the second terminal access the network through a same satellite, the method further comprises at least one of the following:
adding, by the first core network function, a UPF comprised in a target satellite as a protocol data unit session anchor PSA to a protocol data unit PDU session;
adding, by the first core network function, the UPF comprised in the target satellite as an uplink classifier UL CL to a PDU session;
sending, by the first core network function, a third message to the UPF comprised in the target satellite, wherein the third message is used for establishing a voice bearer for the first terminal;
sending, by the first core network function, third information to the UPF comprised in the target satellite, wherein the third information comprises a local forwarding rule;
sending, by the first core network function, a fourth message to the third core network function, wherein the fourth message is used to add a fourth core network function to a communication path; and
sending, by the first core network function, a fifth message to the fourth core network function, wherein the fifth message is used for establishing a voice bearer for the first terminal; wherein
the target satellite is a satellite wherein the first terminal and the second terminal are located.

15. The method according to claim 14, wherein the fourth message comprises first information, and the first information comprises information for indicating a USU service.

16. The method according to claim 1, wherein the performing, by the first core network function, a first operation or a second operation based on the first message comprises:
in a case that the first message further comprises first information for indicating a USU service, performing, by the first core network function, the second operation; wherein
the second message comprises information for indicating a USU service.

17. The method according to claim 13 or 15 or 16, wherein the information for indicating a USU service comprises a data network access identifier DNAI corresponding to the USU service.

18. A communication method, comprising:
receiving, by a second core network function, a sixth message from a fifth core network function, wherein the sixth message comprises information related to a first terminal and information related to a second terminal; and
determining, by the second core network function, that the first terminal and the second terminal access a network through a same satellite or different satellites.

19. The method according to claim 18, wherein the method further comprises:
sending, by the second core network function, a first message to a first core network function, in a case that it is determined that the first terminal and the second terminal access the network through a same satellite; wherein
the first message is used for establishing a voice bearer for the first terminal, the first message comprises information related to the first terminal and information related to the second terminal, the first message further comprises first information, and the first information comprises information for indicating a terminal-satellite-terminal USU service.

20. The method according to claim 18 or 19, wherein the determining, by the second core network function, that the first terminal and the second terminal access a network through a same satellite or different satellites comprises:
in a case that the sixth message further comprises second information, determining, by the second core network function, that the first terminal and the second terminal access the network through a same satellite; wherein
the second information is used to indicate that the first terminal and the second terminal access a network through a same satellite, or to indicate performing a local switching for the first terminal and the second terminal, or to indicate performing a local switching.

21. The method according to claim 18 or 19, wherein
the information related to the first terminal comprises a first Internet protocol IP address, or the information related to the first terminal comprises a first IP address and first port information;
the information related to the second terminal comprises a second IP address, or the information related to the second terminal comprises a second IP address and second port information; and
the determining, by the second core network function, that the first terminal and the second terminal access a network through a same satellite or different satellites comprises at least one of the following:
determining, by the second core network function based on the first IP address and the second IP address, that the first terminal and the second terminal access the network through a same satellite or different satellites; and
determining, by the second core network function based on the first IP address and the first port information, and the second IP address and the second port information, that the first terminal and the second terminal access the network through a same satellite or different satellites.

22. The method according to claim 21, wherein
the determining, by the second core network function based on the first IP address and the second IP address, that the first terminal and the second terminal access the network through a same satellite or different satellites comprises at least one of the following:
determining, by the second core network function based on an IP address range corresponding to the first IP address and an IP address range corresponding to the second IP address, that the first terminal and the second terminal access the network through a same satellite or different satellites;
determining, by the second core network function based on realm information corresponding to the first IP address and realm information corresponding to the second IP address, that the first terminal and the second terminal access the network through a same satellite or different satellites;
determining, by the second core network function, a first cell global identity CGI based on the first IP address, determining a second CGI based on the second IP address, and determining, based on the first CGI and the second CGI, that the first terminal and the second terminal access the network through a same satellite or different satellites;
determining, by the second core network function, an identifier of the first terminal based on the first IP address and determining a first CGI based on the identifier of the first terminal; determining an identifier of the second terminal based on the second IP address and determining a second CGI based on the identifier of the second terminal; and determining, based on the first CGI and the second CGI, that the first terminal and the second terminal access the network through a same satellite or different satellites;
determining, by the second core network function, a first satellite identifier based on the first IP address, determining a second satellite identifier based on the second IP address, and determining, based on the first satellite identifier and the second satellite identifier, that the first terminal and the second terminal access the network through a same satellite or different satellites; and
determining, by the second core network function, an identifier of the first terminal based on the first IP address and determining a first satellite identifier based on the identifier of the first terminal; determining an identifier of the second terminal based on the second IP address and determining a second satellite identifier based on the identifier of the second terminal; and determining, based on the first satellite identifier and the second satellite identifier, that the first terminal and the second terminal access the network through a same satellite or different satellites.

23. The method according to claim 21, wherein
the determining, by the second core network function based on the first IP address and the first port information, and the second IP address and the second port information, that the first terminal and the second terminal access the network through a same satellite or different satellites comprises at least one of the following:
determining, by the second core network function, a first CGI based on the first IP address and the first port information, determining a second CGI based on the second IP address and the second port information, and determining, based on the first CGI and the second CGI, that the first terminal and the second terminal access the network through a same satellite or different satellites;
determining, by the second core network function, an identifier of the first terminal based on the first IP address and the first port information, and determining a first CGI based on the identifier of the first terminal; determining an identifier of the second terminal based on the second IP address and the second port information, and determining a second CGI based on the identifier of the second terminal; and determining, based on the first CGI and the second CGI, that the first terminal and the second terminal access the network through a same satellite or different satellites;
determining, by the second core network function, a first satellite identifier based on the first IP address and the first port information, determining a second satellite identifier based on the second IP address and the second port information, and determining, based on the first satellite identifier and the second satellite identifier, that the first terminal and the second terminal access the network through a same satellite or different satellites; and
determining, by the second core network function, an identifier of the first terminal based on the first IP address and the first port information, and determining a first satellite identifier based on the identifier of the first terminal; determining an identifier of the second terminal based on the second IP address and the second port information, and determining a second satellite identifier based on the identifier of the second terminal; and determining, based on the first satellite identifier and the second satellite identifier, that the first terminal and the second terminal access the network through a same satellite or different satellites.

24. The method according to claim 22 or 23, wherein the determining, by the second core network function based on an IP address range corresponding to the first IP address and an IP address range corresponding to the second IP address, that the first terminal and the second terminal access the network through a same satellite or different satellites comprises:
in a case that the IP address range corresponding to the first IP address is the same as the IP address range corresponding to the second IP address, determining, by the second core network function, that the first terminal and the second terminal access the network through a same satellite;
or,
the determining, by the second core network function based on realm information corresponding to the first IP address and realm information corresponding to the second IP address, that the first terminal and the second terminal access the network through a same satellite or different satellites comprises:
in a case that the realm information corresponding to the first IP address is the same as the realm information corresponding to the second IP address, determining, by the second core network function, that the first terminal and the second terminal access the network through a same satellite;
or,
the determining, based on the first CGI and the second CGI, that the first terminal and the second terminal access the network through a same satellite or different satellites comprises any one of the following:
in a case that the first CGI is the same as the second CGI, determining that the first terminal and the second terminal access the network through a same satellite;
in a case that a base station corresponding to the first CGI is the same as a base station corresponding to the second CGI, determining that the first terminal and the second terminal access the network through a same satellite; and
in a case that a satellite corresponding to the first CGI is the same as a satellite corresponding to the second CGI, determining that the first terminal and the second terminal access the network through a same satellite;
or,
the determining, based on the first satellite identifier and the second satellite identifier, that the first terminal and the second terminal access the network through a same satellite or different satellites comprises:
in a case that the first satellite identifier is the same as the second satellite identifier, determining that the first terminal and the second terminal access the network through a same satellite.

25. The method according to claim 18 or 19, wherein
the information related to the second terminal comprises a second IP address, or the information related to the second terminal comprises a second IP address and second port information; and
the determining, by the second core network function, that the first terminal and the second terminal access a network through a same satellite or different satellites comprises at least one of the following:
determining, by the second core network function based on a third IP address and the second IP address, that the first terminal and the second terminal access the network through a same satellite or different satellites;
determining, by the second core network function based on a third CGI and the second IP address, that the first terminal and the second terminal access the network through a same satellite or different satellites;
determining, by the second core network function based on a third satellite identifier and the second IP address, that the first terminal and the second terminal access the network through a same satellite or different satellites;
determining, by the second core network function based on a third IP address and third port information, and the second IP address and the second port information, that the first terminal and the second terminal access the network through a same satellite or different satellites;
determining, by the second core network function based on a third CGI, the second IP address, and the second port information, that the first terminal and the second terminal access the network through a same satellite or different satellites; and
determining, by the second core network function based on a third satellite identifier, the second IP address, and the second port information, that the first terminal and the second terminal access the network through a same satellite or different satellites; wherein
the third IP address is an IP address of the first terminal stored by the second core network function;
the third port information is port information of the first terminal stored by the second core network function;
the third CGI is a CGI of the first terminal stored by the second core network function; and
the third satellite identifier is an identifier, stored by the second core network function, of a satellite in which the first terminal is located.

26. The method according to claim 25, wherein
the determining, by the second core network function based on a third IP address and the second IP address, that the first terminal and the second terminal access the network through a same satellite or different satellites comprises at least one of the following:
determining, by the second core network function based on an IP address range corresponding to the third IP address and an IP address range corresponding to the second IP address, that the first terminal and the second terminal access the network through a same satellite or different satellites;
determining, by the second core network function based on realm information corresponding to the third IP address and realm information corresponding to the second IP address, that the first terminal and the second terminal access the network through a same satellite or different satellites;
determining, by the second core network function, a third CGI based on the third IP address, determining a second CGI based on the second IP address, and determining, based on the third CGI and the second CGI, that the first terminal and the second terminal access the network through a same satellite or different satellites;
determining, by the second core network function, an identifier of the first terminal based on the third IP address, and determining a third CGI based on the identifier of the first terminal; determining an identifier of the second terminal based on the second IP address, and determining a second CGI based on the identifier of the second terminal; and determining, based on the third CGI and the second CGI, that the first terminal and the second terminal access the network through a same satellite or different satellites;
determining, by the second core network function, a third satellite identifier based on the third IP address, determining a second satellite identifier based on the second IP address, and determining, based on the third satellite identifier and the second satellite identifier, that the first terminal and the second terminal access the network through a same satellite or different satellites; and
determining, by the second core network function, an identifier of the first terminal based on the third IP address, and determining a third satellite identifier based on the identifier of the first terminal; determining an identifier of the second terminal based on the second IP address, and determining a second satellite identifier based on the identifier of the second terminal; and determining, based on the third satellite identifier and the second satellite identifier, that the first terminal and the second terminal access the network through a same satellite or different satellites.

27. The method according to claim 25, wherein
the determining, by the second core network function based on a third CGI and the second IP address, that the first terminal and the second terminal access the network through a same satellite or different satellites comprises at least one of the following:
determining, by the second core network function, a second CGI based on the second IP address, and determining, based on the third CGI and the second CGI, that the first terminal and the second terminal access the network through a same satellite or different satellites; and
determining, by the second core network function, an identifier of the second terminal based on the second IP address, determining a second CGI based on the identifier of the second terminal, and determining, based on the third CGI and the second CGI, that the first terminal and the second terminal access the network through a same satellite or different satellites;
or,
the determining, by the second core network function based on a third CGI, the second IP address, and the second port information, that the first terminal and the second terminal access the network through a same satellite or different satellites comprises at least one of the following:
determining, by the second core network function, a second CGI based on the second IP address and the second port information, and determining, based on the third CGI and the second CGI, that the first terminal and the second terminal access the network through a same satellite or different satellites; and
determining, by the second core network function, an identifier of the second terminal based on the second IP address and the second port information, determining a second CGI based on the identifier of the second terminal, and determining, based on the third CGI and the second CGI, that the first terminal and the second terminal access the network through a same satellite or different satellites.

28. The method according to claim 25, wherein
the determining, by the second core network function based on a third satellite identifier and the second IP address, that the first terminal and the second terminal access the network through a same satellite or different satellites comprises at least one of the following:
determining, by the second core network function, a second satellite identifier based on the second IP address, and determining, based on the third satellite identifier and the second satellite identifier, that the first terminal and the second terminal access the network through a same satellite or different satellites; and
determining, by the second core network function, an identifier of the second terminal based on the second IP address, determining a second satellite identifier based on the identifier of the second terminal, and determining, based on the third satellite identifier and the second satellite identifier, that the first terminal and the second terminal access the network through a same satellite or different satellites;
or,
the determining, by the second core network function based on a third satellite identifier, the second IP address, and the second port information, that the first terminal and the second terminal access the network through a same satellite or different satellites comprises at least one of the following:
determining, by the second core network function, a second satellite identifier based on the second IP address and the second port information, and determining, based on the third satellite identifier and the second satellite identifier, that the first terminal and the second terminal access the network through a same satellite or different satellites; and
determining, by the second core network function, an identifier of the second terminal based on the second IP address and the second port information, determining a second satellite identifier based on the identifier of the second terminal, and determining, based on the third satellite identifier and the second satellite identifier, that the first terminal and the second terminal access the network through a same satellite or different satellites.

29. The method according to claim 25, wherein
the determining, by the second core network function based on a third IP address and third port information, and the second IP address and the second port information, that the first terminal and the second terminal access the network through a same satellite or different satellites comprises at least one of the following:
determining, by the second core network function, a third CGI based on the third IP address and the third port information, determining a second CGI based on the second IP address and the second port information, and determining, based on the third CGI and the second CGI, that the first terminal and the second terminal access the network through a same satellite or different satellites;
determining, by the second core network function, an identifier of the first terminal based on the third IP address and the third port information, and determining a third CGI based on the identifier of the first terminal; determining an identifier of the second terminal based on the second IP address and the second port information, and determining a second CGI based on the identifier of the second terminal; and determining, based on the third CGI and the second CGI, that the first terminal and the second terminal access the network through a same satellite or different satellites;
determining, by the second core network function, a third satellite identifier based on the third IP address and the third port information, determining a second satellite identifier based on the second IP address and the second port information, and determining, based on the third satellite identifier and the second satellite identifier, that the first terminal and the second terminal access the network through a same satellite or different satellites; and
determining, by the second core network function, an identifier of the first terminal based on the third IP address and the third port information, and determining a third satellite identifier based on the identifier of the first terminal; determining an identifier of the second terminal based on the second IP address and the second port information, and determining a second satellite identifier based on the identifier of the second terminal; and determining, based on the third satellite identifier and the second satellite identifier, that the first terminal and the second terminal access the network through a same satellite or different satellites.

30. The method according to any one of claims 26 to 29, wherein
the determining, by the second core network function based on an IP address range corresponding to the third IP address and an IP address range corresponding to the second IP address, that the first terminal and the second terminal access the network through a same satellite or different satellites comprises:
in a case that the IP address range corresponding to the third IP address is the same as the IP address range corresponding to the second IP address, determining, by the second core network function, that the first terminal and the second terminal access the network through a same satellite;
or,
the determining, by the second core network function based on realm information corresponding to the third IP address and realm information corresponding to the second IP address, that the first terminal and the second terminal access the network through a same satellite or different satellites comprises:
in a case that the realm information corresponding to the third IP address is the same as the realm information corresponding to the second IP address, determining, by the second core network function, that the first terminal and the second terminal access the network through a same satellite;
or,
the determining, based on the third CGI and the second CGI, that the first terminal and the second terminal access the network through a same satellite or different satellites comprises any one of the following:
in a case that the third CGI is the same as the second CGI, determining that the first terminal and the second terminal access the network through a same satellite;
in a case that a base station corresponding to the third CGI is the same as a base station corresponding to the second CGI, determining that the first terminal and the second terminal access the network through a same satellite; and
in a case that a satellite corresponding to the third CGI is the same as a satellite corresponding to the second CGI, determining that the first terminal and the second terminal access the network through a same satellite;
or,
the determining, based on the third satellite identifier and the second satellite identifier, that the first terminal and the second terminal access the network through a same satellite or different satellites comprises:
in a case that the third satellite identifier is the same as the second satellite identifier, determining that the first terminal and the second terminal access the network through a same satellite.

31. A communication method, comprising:
receiving, by a fourth core network function, a sixth message from a third core network function, wherein the sixth message comprises first information, and the first information comprises information for indicating a terminal-satellite-terminal USU service; and
performing, by the fourth core network function, a third operation based on the first information; wherein
the third operation comprises at least one of the following:
adding a UPF of a target satellite as a protocol data unit session anchor PSA to a protocol data unit PDU session;
adding the UPF of the target satellite as an uplink classifier UL CL to a PDU session;
sending a seventh message to the UPF of the target satellite, wherein the seventh message is used to indicate establishing a voice bearer for a first terminal; and
sending third information to the UPF of the target satellite, wherein the third information comprises a local forwarding rule; wherein
the target satellite is a satellite wherein the first terminal and a second terminal are located.

32. A communication apparatus, applied to a first core network function, wherein the apparatus comprises:
a receiving unit, configured to receive a first message from a second core network function, wherein the first message is used for establishing a voice bearer for a first terminal, and the first message comprises information related to the first terminal and information related to a second terminal; and
a first processing unit, configured to determine that the first terminal and the second terminal access a network through a same satellite or different satellites;
or,
the apparatus comprises:
a receiving unit, configured to receive a first message from a second core network function, wherein the first message is used for establishing a voice bearer for a first terminal, and the first message comprises information related to the first terminal and information related to a second terminal; and
a first sending unit, configured to send a second message to a third core network function, wherein the second message is used to add a fourth core network function to a communication path, and the fourth core network function is a core network function configured to control a user plane function UPF comprised in a satellite.

33. The apparatus according to claim 32, wherein the first processing unit is specifically configured to:
in a case that it is determined that a satellite in which the first terminal is located comprises a UPF, determine that the first terminal and the second terminal access the network through a same satellite or different satellites.

34. The apparatus according to claim 32 or 33, wherein
the information related to the first terminal comprises a first Internet protocol IP address, or the information related to the first terminal comprises a first IP address and first port information;
the information related to the second terminal comprises a second IP address, or the information related to the second terminal comprises a second IP address and second port information; and
the first processing unit is specifically configured to perform at least one of the following:
determining, based on the first IP address and the second IP address, that the first terminal and the second terminal access the network through a same satellite or different satellites; and
determining, based on the first IP address and the first port information, and the second IP address and the second port information, that the first terminal and the second terminal access the network through a same satellite or different satellites.

35. The apparatus according to claim 32 or 33, wherein
the information related to the second terminal comprises a second IP address, or the information related to the second terminal comprises a second IP address and second port information; and
the first processing unit is specifically configured to perform at least one of the following:
determining, based on a third IP address and the second IP address, that the first terminal and the second terminal access the network through a same satellite or different satellites;
determining, based on a third CGI and the second IP address, that the first terminal and the second terminal access the network through a same satellite or different satellites;
determining, based on a third satellite identifier and the second IP address, that the first terminal and the second terminal access the network through a same satellite or different satellites;
determining, based on a third IP address and third port information, and the second IP address and the second port information, that the first terminal and the second terminal access the network through a same satellite or different satellites;
determining, based on a third CGI, the second IP address, and the second port information, that the first terminal and the second terminal access the network through a same satellite or different satellites; and
determining, based on a third satellite identifier, the second IP address, and the second port information, that the first terminal and the second terminal access the network through a same satellite or different satellites; wherein
the third IP address is an IP address of the first terminal stored by the first core network function;
the third port information is port information of the first terminal stored by the first core network function;
the third CGI is a CGI of the first terminal stored by the first core network function; and
the third satellite identifier is an identifier, stored by the first core network function, of a satellite in which the first terminal is located.

36. The apparatus according to claim 32 or 33, wherein, in a case that the first message further comprises first information or second information, the first processing unit is specifically configured to:
determine, based on the first information or the second information, that the first terminal and the second terminal access the network through a same satellite; wherein
the first information comprises information for indicating a terminal-satellite-terminal USU service; and
the second information is used to indicate that the first terminal and the second terminal access a network through a same satellite, or the second information is used to indicate performing a local switching for the first terminal and the second terminal, or the second information is used to indicate performing a local switching.

37. The apparatus according to any one of claims 32 to 36, further comprising at least one of the following:
a second processing unit, configured to add a UPF comprised in a target satellite as a protocol data unit session anchor PSA to a protocol data unit PDU session, in a case that it is determined that the first terminal and the second terminal access the network through a same satellite;
a third processing unit, configured to add the UPF comprised in the target satellite as an uplink classifier UL CL to a PDU session, in a case that it is determined that the first terminal and the second terminal access the network through a same satellite;
a second sending unit, configured to: in a case that it is determined that the first terminal and the second terminal access the network through a same satellite, send a third message to the UPF comprised in the target satellite, wherein the third message is used for establishing a voice bearer for the first terminal;
a third sending unit, configured to: in a case that it is determined that the first terminal and the second terminal access the network through a same satellite, send third information to the UPF comprised in the target satellite, wherein the third information comprises a local forwarding rule;
a fourth sending unit, configured to: in a case that it is determined that the first terminal and the second terminal access the network through a same satellite, send a fourth message to the third core network function, wherein the fourth message is used to add a fourth core network function to a communication path; and
a fifth sending unit, configured to: in a case that it is determined that the first terminal and the second terminal access the network through a same satellite, send a fifth message to the fourth core network function, wherein the fifth message is used for establishing a voice bearer for the first terminal; wherein
the target satellite is a satellite wherein the first terminal and the second terminal are located.

38. The apparatus according to claim 32, wherein the first sending unit is specifically configured to:
in a case that the first message further comprises first information for indicating a USU service, send a second message to the third core network function; wherein
the second message comprises information for indicating a USU service.

39. A communication apparatus, applied to a second core network function, wherein the apparatus comprises:
a first receiving unit, configured to receive a sixth message from a fifth core network function, wherein the sixth message comprises information related to a first terminal and information related to a second terminal; and
a processing unit, configured to determine that the first terminal and the second terminal access a network through a same satellite or different satellites.

40. The apparatus according to claim 39, further comprising:
a sending unit, configured to send a first message to a first core network function, in a case that it is determined that the first terminal and the second terminal access the network through a same satellite; wherein
the first message is used for establishing a voice bearer for the first terminal, the first message comprises information related to the first terminal and information related to the second terminal, the first message further comprises first information, and the first information comprises information for indicating a terminal-satellite-terminal USU service.

41. The apparatus according to claim 39 or 40, wherein the processing unit is specifically configured to:
in a case that the sixth message further comprises second information, determine that the first terminal and the second terminal access the network through a same satellite; wherein
the second information is used to indicate that the first terminal and the second terminal access a network through a same satellite, or to indicate performing a local switching for the first terminal and the second terminal, or to indicate performing a local switching.

42. The apparatus according to claim 39 or 40, wherein
the information related to the first terminal comprises a first Internet protocol IP address, or the information related to the first terminal comprises a first IP address and first port information;
the information related to the second terminal comprises a second IP address, or the information related to the second terminal comprises a second IP address and second port information; and
the processing unit is specifically configured to perform at least one of the following:
determining, based on the first IP address and the second IP address, that the first terminal and the second terminal access the network through a same satellite or different satellites; and
determining, based on the first IP address and the first port information, and the second IP address and the second port information, that the first terminal and the second terminal access the network through a same satellite or different satellites.

43. The apparatus according to claim 39 or 40, wherein
the information related to the second terminal comprises a second IP address, or the information related to the second terminal comprises a second IP address and second port information; and
the processing unit is specifically configured to perform at least one of the following:
determining, based on a third IP address and the second IP address, that the first terminal and the second terminal access the network through a same satellite or different satellites;
determining, based on a third CGI and the second IP address, that the first terminal and the second terminal access the network through a same satellite or different satellites;
determining, based on a third satellite identifier and the second IP address, that the first terminal and the second terminal access the network through a same satellite or different satellites;
determining, based on a third IP address and third port information, and the second IP address and the second port information, that the first terminal and the second terminal access the network through a same satellite or different satellites;
determining, based on a third CGI, the second IP address, and the second port information, that the first terminal and the second terminal access the network through a same satellite or different satellites; and
determining, based on a third satellite identifier, the second IP address, and the second port information, that the first terminal and the second terminal access the network through a same satellite or different satellites; wherein
the third IP address is an IP address of the first terminal stored by the second core network function;
the third port information is port information of the first terminal stored by the second core network function;
the third CGI is a CGI of the first terminal stored by the second core network function; and
the third satellite identifier is an identifier, stored by the second core network function, of a satellite in which the first terminal is located.

44. A communication apparatus, applied to a fourth core network function, wherein the apparatus comprises:
a receiving unit, configured to receive a sixth message from a third core network function, wherein the sixth message comprises first information, and the first information comprises information for indicating a terminal-satellite-terminal USU service; and
an execution unit, configured to perform a third operation based on the first information; wherein
the third operation comprises at least one of the following:
adding a UPF of a target satellite as a protocol data unit session anchor PSA to a protocol data unit PDU session;
adding the UPF of the target satellite as an uplink classifier UL CL to a PDU session;
sending a seventh message to the UPF of the target satellite, wherein the seventh message is used to indicate establishing a voice bearer for a first terminal; and
sending third information to the UPF of the target satellite, wherein the third information comprises a local forwarding rule; wherein
the target satellite is a satellite wherein the first terminal and a second terminal are located.

45. A communication device, comprising a processor and a memory, wherein a program or instructions capable of running on the processor are stored in the memory, and when the program or instructions are executed by the processor, the steps of the communication method according to any one of claims 1 to 17 are implemented; the steps of the communication method according to any one of claims 18 to 30 are implemented; or the steps of the communication method according to claim 31 are implemented.

46. A readable storage medium, wherein the readable storage medium stores a program or instructions, and when the program or instructions are executed by a processor, the steps of the communication method according to any one of claims 1 to 17 are implemented; the steps of the communication method according to any one of claims 18 to 30 are implemented; or the steps of the communication method according to claim 31 are implemented.
